# EUROPÄISCHE PATENTSCHRIFT

(11) **EP 4 733 866 B1**
(45) Veröffentlichungstag und Bekanntmachung des Hinweises auf die Patenterteilung: **09.09.2026**
(21) Anmeldenummer: 24209005.8
(22) Anmeldetag: 25.10.2024
(51) Int. Cl.: G05B 19/042

(54) **VERFAHREN ZUM BETREIBEN EINES SIGNALGERÄTS, SYSTEM ZUR OPTI-SCHEN UND/ODER AKUSTISCHEN WIEDERGABE EINES ZUSTANDS UND COMPUTERPROGRAMMPRODUKT**
METHOD FOR OPERATING A SIGNAL DEVICE, SYSTEM FOR OPTICAL AND/OR ACOUSTIC REPRODUCTION OF A STATE AND COMPUTER PROGRAM PRODUCT
PROCÉDÉ DE FONCTIONNEMENT D'UN APPAREIL DE SIGNAL, SYSTÈME DE REPRODUCTION OPTIQUE ET/OU ACOUSTIQUE D'UN ÉTAT ET PRODUIT PROGRAMME INFORMATIQUE

(43) Veröffentlichungstag der Anmeldung: 29.04.2026
(73) Patentinhaber: AUER Signal GmbH, 1230 Wien (AT)
(72) Erfinder: FEHRINGER, Thomas, 1220 Wien (AT); KOENCZOEL, Martin, 2753 Markt Piesting (AT)
(74) Vertreter: SONN Patentanwälte GmbH & Co KG

(56) Entgegenhaltungen:
- DE-A1- 102023 102 272
- US-A- 5 185 866

## Beschreibung

Die Erfindung betrifft ein Verfahren zum Betreiben eines Signalgeräts, das dazu eingerichtet ist, einen Zustand optisch und/oder akustisch zu signalisieren, wobei das Signalgerät zumindest zwei elektrische Signalgerätkontakte zur Ansteuerung und Energieversorgung des Signalgeräts aufweist.

Des Weiteren betrifft die Erfindung ein System zur optischen und/oder akustischen Wiedergabe eines Zustands, aufweisend:
eine speicherprogrammierbare Steuerung mit zumindest einem Ausgangskontakt;
ein Signalgerät mit zumindest zwei Signalgerätkontakten zur Ansteuerung und Energieversorgung des Signalgeräts.

Darüber hinaus betrifft die Erfindung ein Computerprogrammprodukt.

Signalgeräte, wie sie beispielsweise aus EP 3 043 111 A1 bekannt sind, werden häufig dazu eingesetzt, Zustände von industriellen Anlagen oder Maschinen optisch anzuzeigen und/oder akustisch wiederzugeben. Um die Zustände zu signalisieren, weisen die Signalgeräte typischerweise Leuchteinheiten mit einer oder mehreren LEDs und/oder akustische Toneinheiten auf. Mit Hilfe der Signalgeräte kann zum Beispiel signalisiert werden, dass die Anlagen bzw. Maschinen in Betrieb sind oder ein Handlungsbedarf besteht, insbesondere eine Wartung durchgeführt werden muss. Die Signalgeräte erfüllen zudem oftmals auch Warnfunktionen, da sie gefährliche Zustände und Fehler im Betrieb der Anlagen bzw. Maschinen signalisieren können. Beispielsweise können Signalgeräte bei einem Prüffeld, bei dem hohe elektrische Spannungen bei Prüfvorgängen eingesetzt werden, anzeigen, dass ein solcher Prüfvorgang durchgeführt wird und Personal daher einen Sicherheitsabstand einhalten muss.

Wenn Signalgeräte verschiedene Funktionen, Töne oder Farben ausgeben können, dann erfolgt die Steuerung vielfach über eine Anzahl an Eingangskontakten im Signalgerät, wobei ein paralleles Schaltmuster an den Eingängen des Signalgerätes einer vorgegebenen Funktion des Signalgerätes zugeordnet ist. So können bei beispielsweise vier Eingangskontakten sieben verschiedene Funktionen eingestellt werden (2³-1 = 7), wenn einer der vier Eingangskontakte ein Bezugspotential führt. Bei 5 Eingangskontakten können demnach 15 Funktionen (2⁴-1 = 15) abgebildet werden. Nachteilig daran ist jedoch, dass die Verdrahtungskosten für diese Umsetzung hoch sind.

Signalgeräte sind im automatisierten industriellen oder gebäudetechnischen Umfeld oftmals mit einer speicherprogrammierbaren Steuerung (SPS) verbunden. Mit zunehmender Funktionalität von Signalgeräten steigt somit nicht nur der Verdrahtungsaufwand, sondern auch die Anzahl an notwendigen Ausgangskontakten der SPS zur Ansteuerung des Signalgeräts.

Alternativ kann vorgesehen sein, dass ein Signalgerät parametrisiert wird, beispielsweise durch mechanische Schalter im Gerät selbst, oder durch Programmierung des Signalgerätes durch einen Anwender, beispielsweise über eine USB-Schnittstelle, um bestimmte Funktionen vor der Inbetriebnahme zu definieren und im Folgenden die Anzahl an Kontaktverbindungen gering zu halten. Dem ist nachteilig, dass damit wiederum die Flexibilität im Betrieb eingeschränkt wird und auch im Fehlerfall ein Austausch nicht ohne vorige Parametrisierung des Austauschgerätes passieren kann.

In modernen automatisierten Industrieanlagen sind Signalgeräte typischerweise mit einem übergeordneten Steuerungssystem, beispielsweise einer Gebäudeleittechnik oder einer Maschinen- bzw. Anlagensteuerung, verbunden. Um die Signalgeräte flexibel einsetzen zu können, sind viele Signalgeräte in ein Bussystem oder in ein anderes System zur Datenübertragung integrierbar. Zu diesem Zweck können diese Signalgeräte einen Kommunikationsbaustein zur Verbindung mit Bussystemen, beispielsweise Profibus, AS-Interface oder CAN-Bus, oder andere Systeme zur Datenübertragung, wie beispielsweise IO-Link, aufweisen. Durch die Integration in Bussysteme können Signalgeräte flexibel und individuell eingesetzt und nur mit minimalem Aufwand nachgerüstet werden. Ein vernetztes Signalgerät mit einem Buskoppler ist beispielsweise aus DE 10 2005 046 545 A1 bekannt. Auch aus EP 2 182 776 A1 ist eine vernetzte Signalsäule bekannt, die mit diversen Bussystemen verbindbar ist.

Auch die Maschinen- bzw. Anlagensteuerungen - oftmals eine speicherprogrammierbare Steuerung - weisen Schnittstellen zur Integration in ein Bussystem oder ein anderes System zur Datenübertragung auf.

Nachteilig bei Signalgeräten, die in Bussysteme oder andere Systeme zur Datenkommunikation eingebunden sind, ist jedoch, dass die Signalgeräte einen eigenen Kommunikationsbaustein als Schnittstelle zur Einbindung in ein Bussystem oder ein anderes System zur Datenübertragung benötigen. Zudem muss auch das übergeordnete Steuerungssystem eine derartige Schnittstelle verwenden. Dadurch wird der Aufwand für eine Kommunikation zwischen den Signalgeräten und dem übergeordneten Steuerungssystem erhöht. Die Daten werden zudem oftmals auch mit gattungsfremden Geräten geteilt. Bussysteme, die viele unterschiedliche Geräte miteinander verbinden, können zudem bestimmte Daten priorisieren, sodass die Kommunikation zwischen Geräten niedriger Priorität verzögert werden kann. Des Weiteren werden durch die Notwendigkeit zusätzlicher Kommunikationsbausteine, eigener Anschlüsse und gegebenenfalls vorgegebener standardisierter Verkabelungen die Kosten erhöht. Ein weiterer Nachteil ist, dass Bussysteme meist viele Geräte untereinander und oftmals auch mit weiteren Netzwerken verbinden, sodass sie ein beliebtes Ziel für Cyberangriffe darstellen.

Aus DE 10 2023 102 272 A1 ist ein Feldgerät zur Erfassung eines Füllstandes mit einer Darstellungseinheit bekannt. Das Feldgerät wird über eine Zweidrahtverbindung mit Energie und Daten versorgt. Die Darstellungseinheit dient zur farbigen Darstellung einer Prozessgröße. Zu diesem Zweck sind mehrere Darstellungsflächen und eine Beleuchtungseinheit vorgesehen.

Die US 5,185,866 A offenbart ein modulares Dokumentenverarbeitungssystem mit lokal gesteuerten Stationen zur Zusammenstellung und Kuvertierung von Dokumenten bei hoher Geschwindigkeit und Flexibilität. Kernmerkmal ist eine duale Kommunikationsarchitektur mit drei separaten Datenkanälen: ein zentraler Master-Slave-Kanal, ein Fehlermeldungskanal und ein Peer-to-Peer-Kanal zur Übertragung dynamischer Kollationsdatensätze ("Piece Records") zwischen den Modulen. Jede Modulstation arbeitet asynchron im On-Demand-Modus, wodurch Erweiterungen ohne Systemneukonfiguration möglich sind und eine präzise Steuerung jedes Verarbeitungsschritts erfolgt. Zusätzlich erlaubt das System eine automatische Konfiguration beim Einschalten.

Im Lichte dieser Ausführungen ist es daher Aufgabe der vorliegenden Erfindung, die Nachteile des Standes der Technik zu lindern oder gar gänzlich zu beseitigen. Vorzugsweise ist es Aufgabe der vorliegenden Erfindung, ein Verfahren zum Betreiben eines Signalgeräts sowie ein System zur optischen und/oder akustischen Wiedergabe eines Zustands der eingangs erwähnten Art zur Verfügung zu stellen, bei denen eine vereinfachte, günstige und sichere Kommunikation zwischen einem Signalgerät und einem übergeordneten Steuerungssystem ermöglicht wird.

Gelöst wird die Aufgabe durch ein Verfahren zum Betreiben eines Signalgeräts nach Anspruch 1 sowie durch ein System zur optischen und/oder akustischen Wiedergabe eines Zustands nach Anspruch 14. Ein Computerprogrammprodukt ist in Anspruch 15 angegeben.

Erfindungsgemäß ist bei einem Verfahren der eingangs erwähnten Art vorgesehen, dass zumindest ein Signalgerätkontakt des Signalgeräts mit einer Verbindungsleitung direkt an einen elektrischen Ausgangskontakt einer speicherprogrammierbaren Steuerung angeschlossen ist, sodass die elektrische Verbindung zwischen dem Ausgangskontakt und dem Signalgerätkontakt frei von aktiven elektronischen Bauelementen ist, und an dem elektrischen Ausgangskontakt der speicherprogrammierbaren Steuerung serielle Daten an das Signalgerät übermittelt werden. Vorzugsweise wird an demselben elektrischen Ausgangskontakt über die Verbindungsleitung oder an zumindest einem anderen elektrischen Ausgangskontakt der speicherprogrammierbaren Steuerung über eine andere Verbindungsleitung elektrische Energie von der speicherprogrammierbaren Steuerung an das Signalgerät übertragen. Vorteilhafterweise ist bei der vorliegenden Erfindung somit kein eigener Kommunikationsbaustein zur Einbindung des Signalgeräts in ein Bussystem oder in ein anderes System zur Datenkommunikation erforderlich. Auch die speicherprogrammierbare Steuerung benötigt keinen solchen Kommunikationsbaustein, um Daten an das Signalgerät zu übermitteln, da die Kommunikation über die Ausgangskontakte der speicherprogrammierbaren Steuerung erfolgen kann. Das Signalgerät, insbesondere dessen Steuerungseinheit, die vorzugsweise als Mikrocontroller ausgebildet ist, ist direkt mit den Ausgangskontakten der speicherprogrammierbaren Steuerung (deutsche Abkürzung: SPS; englisch: programmable logic controller; englische Abkürzung: PLC) über eine oder mehrere Verbindungsleitungen verbunden.

Dadurch ist eine direkte Kommunikation zwischen der speicherprogrammierbaren Steuerung und dem Signalgerät gegeben. Vorteilhaft ist in diesem Zusammenhang, dass Signalgeräte in vielen Fällen bereits eine Steuerungseinheit in Form beispielsweise eines Mikrocontrollers aufweisen und bei speicherprogrammierbaren Steuerungen ein oder mehrere Ausgangskontakte vorgesehen sind. Mit der vorliegenden Erfindung können somit bestehende Strukturen genutzt und daher auf zusätzliche, teure Kommunikationsbausteine verzichtet werden.

Vorteilhafterweise ist das erfindungsgemäße Verfahren daher auf einfache Weise bei bestehenden Maschinen oder Anlagen, die speicherprogrammierbare Steuerungen und Signalgeräte nutzen, nachrüstbar. Unter direkter Verbindung des Signalgeräts mit der speicherprogrammierbaren Steuerung über eine oder mehrere Verbindungsleitungen wird eine Verbindung verstanden, die kein aktives elektrisches Bauelement, wie etwa ein Kommunikationsbaustein zur Einbindung in ein Bussystem, aufweist. Die elektrische Verbindung zwischen dem Ausgangskontakt und dem Signalgerätkontakt ist somit frei von aktiven elektronischen Bauelementen. Der Ausgangskontakt der speicherprogrammierbaren Steuerung ist vorzugsweise normalerweise dazu eingerichtet, Maschinen oder Anlagen anzusteuern oder zu regeln, wird erfindungsgemäß aber zur Datenkommunikation verwendet. Passive elektrische Bauelemente, wie etwa Widerstände, Induktivitäten oder (Stütz-)Kondensatoren können dabei vorgesehen sein, beispielsweise als Filter.

Verbindungsleitungen werden im Allgemeinen und in dieser Offenbarung nicht als elektrische Bauelemente angesehen. Vorzugsweise sind der zumindest eine Ausgangskontakt und der zumindest eine Signalgerätkontakt ausschließlich über die Verbindungsleitung elektrisch miteinander verbunden, wobei der der zumindest eine Ausgangskontakt und/oder der zumindest eine Signalgerätkontakt in einem Stecker bzw. einer Kupplung enthalten seinen können. Bevorzugt weist die direkte Verbindung des Signalgeräts mit der speicherprogrammierbaren Steuerung aber auch keine passiven elektrischen Bauelemente auf. Besonders bevorzugt ist die Verbindungsleitung bzw. sind die Verbindungsleitungen (wenn mehrere vorgesehen sind) allenfalls über Steckverbindungen unmittelbar an die vorgesehenen Ausgangskontakte und Signalgerätkontakte angeschlossen. Unter direkter Verbindung des Signalgeräts mit der speicherprogrammierbaren Steuerung wird vorzugsweise eine Verbindung verstanden, bei der Spannungssignale allenfalls proportional verändert, aber in der Form im Wesentlichen erhaltend von der speicherprogrammierbaren Steuerung an das Signalgerät übertragen werden können. Die Spannungssignale werden vorzugsweise unmittelbar, d.h. ohne Zeitverzögerung durch z.B. eine Signalverarbeitung, wie das bei einem Kommunikationsbaustein der Fall wäre, von einem Ausgangskontakt zu einem Signalgerätkontakt weitergeleitet. Vorzugsweise ermöglicht eine direkte Verbindung eine zeitlich im Wesentlichen unverzögerte und insbesondere unveränderte Übertragung der Spannungssignale. Besonders bevorzugt ist die direkte Verbindung zwischen einer Steuerungseinheit des Signalgeräts, die beispielsweise als Mikroprozessor oder Mikrocontroller vorliegen kann, und der speicherprogrammierbaren Steuerung ausgebildet.

Eine speicherprogrammierbare Steuerung ist ein Gerät, das zur Steuerung und/oder Regelung einer Maschine oder Anlage eingesetzt wird und auf digitaler Basis programmiert wird. Zur Steuerung und/oder Regelung werden normalerweise die Ausgangskontakte einer speicherprogrammierbaren Steuerung verwendet, bei der Erfindung wird zumindest ein Ausgangskontakt jedoch zur Datenkommunikation eingesetzt. Zu diesem Zweck weist die speicherprogrammierbare Steuerung eine Prozessoreinheit auf, auf der ein oder mehrere Programme, insbesondere Steuerungs- und/oder Regelungsprogramme, ausgeführt werden können. Die Prozessoreinheit kann dabei auch ein Programm ausführen, welches die Ausgangskontakte der speicherprogrammierbaren Steuerung für eine Kommunikation mit dem Signalgerät ansteuert. Die Kommunikation kann dabei durch Übermittlung von Spannungssignalen, insbesondere durch Verändern des Spannungslevels an den Ausgangskontakten, erfolgen. Bevorzugt ist eine digitale und binäre Datenkommunikation zwischen der speicherprogrammierbaren Steuerung und dem Signalgerät vorgesehen. Insbesondere können zwei unterschiedliche Spannungslevel vorgesehen sein, die zur Datenkommunikation genutzt werden, wobei ein Spannungslevel vorzugsweise ein Bezugspotential ist. Beispielsweise werden Daten durch Einschalten und Ausschalten des betreffenden Ausgangskontakts übertragen. Dadurch können Bitmuster erzeugt werden. Alternativ kann statt dem Ausschalten des Ausgangskontakts das Bezugspotential, welches beispielsweise im Wesentlichen 0 V betragen kann, angelegt werden. Die Daten werden somit vorzugsweise nicht auf eine vorgegebene elektrische Spannung aufmoduliert, sondern durch Einschalten und vollständiges Ausschalten bzw. Anlegen des Bezugspotentials generiert. Das Signalgerät und die speicherprogrammierbare Steuerung besitzen vorzugsweise dasselbe Bezugspotential. Das Bezugspotential kann beispielsweise 0 V entsprechen. In diesem Fall kann von einem gemeinsamen Massepotential gesprochen werden. Möglich ist aber auch, dass das Bezugspotential einer höheren Spannung als 0 V entspricht, also einer Plus-Spannung. Ein Spannungslevel zur Datenkommunikation kann insbesondere im Falle einer Plus-Spannung als Bezugspotential auch unterhalb des Bezugspotentials liegen. Bei einem konkreten Beispiel kann das gemeinsame Bezugspotential für das Signalgerät und die speicherprogrammierbare Steuerung bei 24 V liegen. Die Spannungslevel können in diesem Fall beispielsweise bei 24 V, also dem Bezugspotential, und im Bereich unterhalb von 24 V, beispielsweise bei 5 V, liegen. Neben der Datenkommunikation mit dem Signalgerät kann die speicherprogrammierbare Steuerung auch dazu ausgebildet sein, das Signalgerät mit elektrischer Energie zu versorgen. Die Energie kann beispielsweise über dieselbe Verbindungsleitung übertragen werden, die auch zur Datenkommunikation genutzt wird. Möglich ist aber auch, dass eine andere Verbindungsleitung, die einen anderen Signalgerätkontakt mit einem anderen Ausgangskontakt der speicherprogrammierbaren Steuerung verbindet, zur Energieübertragung von der speicherprogrammierbaren Steuerung zu dem Signalgerät genutzt wird. Bei einer weiteren Ausführungsform wird die Energie des Signalgeräts nicht von der speicherprogrammierbaren Steuerung, sondern einer Energieversorgungseinrichtung oder einem anderen Gerät zur Verfügung gestellt und nicht von der speicherprogrammierbaren Steuerung. Bevorzugt ist aber, wenn die Energie von der speicherprogrammierbaren Steuerung über die Verbindungsleitung zur Datenkommunikation oder eine andere Verbindungsleitung an das Signalgerät übertragen wird. Zur Kommunikation und Energieversorgung des Signalgeräts kann die speicherprogrammierbare Steuerung mehrere Ausgangskontakte aufweisen. Die speicherprogrammierbare Steuerung kann insbesondere mehr Ausgangskontakte aufweisen, als zur Verbindung mit dem Signalgerät genutzt werden. Auch das Signalgerät kann mehr Signalgerätkontakte aufweisen, als zur Verbindung mit der speicherprogrammierbaren Steuerung genutzt werden. Die Ausgangskontakte der speicherprogrammierbaren Steuerung können eine Spannung im Bereich zwischen 0 V und 30 V ausgeben. An den Ausgangskontakten kann eine elektrische Leistung von jeweils zumindest 0,5 W abgerufen werden. Die Ausgangskontakte und/oder die Signalgerätkontakte können bei einer Ausführungsform der Erfindung mechanische Verbindungsmittel zur Befestigung von Verbindungsleitungen aufweisen. Die mechanischen Verbindungsmittel können beispielsweise werkzeuglos oder zum Beispiel mittels eines Schraubenziehers fixiert werden. Bei einer Ausführungsform der Erfindung können die mechanischen Verbindungsmittel als Stecker oder als Kupplung ausgebildet sein. Es kann auch vorgesehen sein, dass mehrere Signalgerätkontakte in einem gemeinsamen Stecker oder in einer gemeinsamen Kupplung des Signalgeräts angeordnet sind. Analog kann vorgesehen sein, dass mehrere Ausgangskontakte in einem gemeinsamen Stecker oder in einer gemeinsamen Kupplung der speicherprogrammierbaren Steuerung angeordnet sind. Die Verbindungsleitungen können jeweils korrespondierende Stecker und/oder Kupplungen aufweisen, um eine Verbindung mit der jeweiligen Kupplung bzw. dem jeweiligen Stecker des Signalgeräts und/oder der speicherprogrammierbaren Steuerung herzustellen.

Die Verbindungsleitungen können auch in korrespondierende gemeinsame Stecker und/oder gemeinsame Kupplungen münden. Die Signalgerätkontakte können jeweils mit einer Verbindungsleitung mit einem entsprechenden Ausgangskontakt der speicherprogrammierbaren Steuerung verbunden sein. Die Verbindungsleitungen können dabei innerhalb eines gemeinsamen Verbindungskabels angeordnet oder als separate Verbindungsleitungen vorgesehen sein. Durch den Anschluss des Signalgeräts an die speicherprogrammierbare Steuerung kann eine Punkt-zu-Punkt-Verbindung zwischen dem Signalgerät und der speicherprogrammierbaren Steuerung ausgebildet werden. Vorzugsweise weist das Signalgerät genau zwei oder genau drei Signalgerätekontakte zur Energieversorgung und Datenkommunikation, insbesondere zur Verbindung mit der speicherprogrammierbaren Steuerung, auf. Es können aber, wie bereits erwähnt, mehr Signalgerätkontakte vorgesehen sein, als zur Verbindung mit der speicherprogrammierbaren Steuerung erforderlich sind. Analoges gilt für die Ausgangskontakte der speicherprogrammierbaren Steuerung, die typischerweise mehr Ausgangskontakte umfasst, als zur Kommunikation und gegebenenfalls Energieübertragung mit dem Signalgerät erforderlich wären. Die speicherprogrammierbare Steuerung kann eine Vielzahl von Ausgangskontakten aufweisen, von denen zumindest einer oder zumindest zwei, bei einer Ausführungsform der Erfindung genau zwei oder genau drei, dezidiert zur Datenkommunikation und Energieversorgung des Signalgeräts vorgesehen sind. Auch die speicherprogrammierbare Steuerung kann somit mehr Ausgangskontakte aufweisen, als zur Verbindung mit dem Signalgerät erforderlich sind. Die serielle Übermittlung der Daten und die Übertragung der elektrischen Energie an das Signalgerät kann über dieselbe Verbindungsleitung oder über unterschiedliche Verbindungsleitungen zwischen dem Signalgerät und der speicherprogrammierbaren Steuerung erfolgen. Bei einer Ausführung von der Erfindung ist das Signalgerät als Signalsäule ausgebildet. Das Signalgerät kann zumindest eine Leuchteinheit aufweisen, um einen Zustand, insbesondere einen Betriebszustand einer Maschine oder einer Anlage, visuell zu signalisieren. Die zumindest eine Leuchteinheit kann eine oder mehrere Lichtquellen, wie etwa LEDs und/oder Glühlampen, aufweisen.

Zusätzlich oder alternativ kann das Signalgerät auch zumindest eine akustische Toneinheit aufweisen, um einen Zustand, insbesondere einen Betriebszustand einer Maschine oder einer Anlage, akustisch zu signalisieren. Die Toneinheit kann hierzu beispielsweise einen oder mehrere Tonquellen, wie etwa Lautsprecher und/oder einen Summer, aufweisen. Die zumindest eine Leuchteinheit und/oder die zumindest eine Toneinheit können in einem gemeinsamen Gehäuse des Signalgeräts angeordnet sein.

Insbesondere können die zumindest eine Leuchteinheit und/oder die zumindest eine Toneinheit in dem Gehäuse gekapselt sein. Die zumindest eine Leuchteinheit kann bei einer Ausführungsform der Erfindung mehrere insbesondere übereinander angeordnete Leuchtgruppen aufweisen. Die Leuchtgruppen können jeweils wiederum eine oder mehrere vorzugsweise unabhängig voneinander ansteuerbare Lichtquellen aufweisen. Die Farben und/oder Leuchtstärke der jeweiligen Leuchtgruppen, insbesondere der Lichtquellen der jeweiligen Leuchtgruppe, können individuell einstellbar sein. Bei einer anderen Ausführungsform der Erfindung ist jeder Leuchtgruppe eine vorgegebene Farbe, beispielsweise grün, rot, blau, gelb oder orange, zugeordnet. Die Leuchtstärke kann dabei jedoch einstellbar sein. Mithilfe der Leuchtgruppen können zum Beispiel Muster mit unterschiedlichen Farben und/oder Leuchtstärken ausgegeben werden. Die Muster können zeitlich veränderlich sein. Damit können beispielsweise Lauflichtsignalisierungen, Blinklichtsignalisierungen oder Umlauflichtsignalisierungen realisiert werden. Das Signalgerät kann eine Steuerungseinheit aufweisen, um die zumindest eine Leuchteinheit und/oder die zumindest eine Toneinheit zu steuern. Das Signalgerät kann bei einer Ausführungsform der Erfindung auch mehrere Leuchteinheiten und/oder Toneinheiten aufweisen. Das Signalgerät kann eine Adresse aufweisen, mit der es angesteuert werden kann.

Vorteilhaft ist, wenn die Übermittlung der Daten durch eine Änderung einer elektrischen Spannung erfolgt, wobei zumindest ein erster Spannungslevel sowie ein zweiter Spannungslevel vorgesehen sind. Der erste Spannungslevel ist vom zweiten Spannungslevel verschieden. Der erste Spannungslevel entspricht vorzugsweise einem Bezugspotential, insbesondere einer Spannung von im Wesentlichen 0 V. Zur Übermittlung der Daten kann die elektrische Spannung an dem entsprechenden Ausgangskontakt bzw. den entsprechenden Ausgangskontakten der speicherprogrammierbaren Steuerung variiert werden, zumindest zwischen dem ersten und dem zweiten Spannungslevel. Besonders bevorzugt ist dabei, wenn lediglich exakt zwei Spannungslevel verwendet werden. Bei einer Ausführungsform der Erfindung ist vorgesehen, dass der erste Spannungslevel durch Ausschalten des entsprechenden Ausgangskontakts oder durch Legen des entsprechenden Ausgangskontakts auf das Bezugspotential erfolgt. Mit anderen Worten muss dabei der entsprechende Ausgangskontakt lediglich zwischen einer Ausgabespannung gemäß dem zweiten Spannungslevel und dem Bezugspotential, insbesondere 0 V, gewechselt werden. Der Spannungslevel bezieht sich auf ein Bezugspotential, mit dem das Signalgerät verbunden ist. Der zweite Spannungslevel kann beispielsweise zumindest 5V, zumindest 10 V, zumindest 15 V oder zumindest 20 V betragen.

Eine besonders einfache Ausgestaltung der Erfindung ergibt sich, wenn zwischen dem Signalgerät und der speicherprogrammierbaren Steuerung eine unidirektionale Verbindung vorliegt und Daten und vorzugsweise Energie ausschließlich von der speicherprogrammierbaren Steuerung zu dem Signalgerät übertragen werden. Eine Datenübertragung oder eine Energieübertragung von dem Signalgerät zur speicherprogrammierbaren Steuerung ist bei dieser Ausführungsform somit nicht vorgesehen. Alternativ kann jedoch eine bidirektionale Verbindung zwischen dem Signalgerät und der speicherprogrammierbaren Steuerung vorgesehen sein, sodass auch Daten von dem Signalgerät an die speicherprogrammierbare Steuerung übertragen werden können.

Bei einer Variante der Erfindung sind zumindest drei Ausgangskontakte an der speicherprogrammierbaren Steuerung, zumindest drei Signalgerätkontakte an dem Signalgerät und zumindest drei Verbindungsleitungen vorgesehen, wobei die zumindest drei Verbindungsleitungen eine Bezugspotentialverbindungsleitung, die ein Bezugspotential führt, eine Energieversorgungsverbindungsleitung, die das Signalgerät mit elektrischer Energie versorgt, sowie eine Datenverbindungsleitung, die Daten an das Signalgerät übermittelt, umfassen. Mit anderen Worten ist bei dieser Variante der Erfindung die Übermittlung der Daten von der Übertragung der elektrischen Energie getrennt. Die zumindest drei Verbindungsleitungen verbinden die zumindest drei Ausgangskontakte der speicherprogrammierbaren Steuerung mit den zumindest drei Signalgerätkontakten des Signalgeräts insbesondere direkt. Bei dieser Ausführungsform werden Daten und Energie von der speicherprogrammierbaren Steuerung an das Signalgerät übertragen. Die Bezugspotentialverbindungsleitung führt vorzugsweise das elektrische Bezugspotential 0 V. Das Bezugspotential kann aber auch eine positive Spannung sein und beispielsweise im Bereich zwischen 10 V und 30 V liegen. Die Energieversorgungsverbindungsleitung kann eine Gleichspannung führen, die über die Zeit, mit Ausnahme von Ein- und Ausschaltvorgängen und gegebenenfalls Umschaltvorgängen, im Wesentlichen konstant ist und beispielsweise im Bereich zwischen 10 V und 30 V liegt. Das an der Energieversorgungsverbindungsleitung geführte Potential unterscheidet sich vom Bezugspotential. Die Datenverbindungsleitung führt eine veränderliche Spannung, insbesondere eine Spannung, die zwischen zwei Spannungslevel variiert wird, um ein Bitmuster zu erzeugen. Bei einer Variante der Erfindung sind genau drei Signalgerätkontakte an dem Signalgerät zur Verbindung mit der speicherprogrammierbaren Steuerung sowie genau drei Ausgangskontakte zur Verbindung mit dem Signalgerät vorgesehen. Entsprechend sind bei dieser Variante genau drei Verbindungsleitungen vorgesehen. Alternativ können aber mehr als drei Signalgerätkontakte und/oder mehr als drei Ausgangskontakte vorgesehen sein, von denen jeweils nur drei Signalgerätkontakte bzw. nur drei Ausgangskontakte zur Verbindung zwischen dem Signalgerät und der speicherprogrammierbaren Steuerung genutzt werden.

Bei einer alternativen Variante der Erfindung ist vorgesehen, dass an dem Signalgerät genau zwei Signalgerätkontakte zur Verbindung mit der speicherprogrammierbaren Steuerung, an der speicherprogrammierbaren Steuerung genau zwei Ausgangskontakte zur Verbindung mit dem Signalgerät und genau zwei Verbindungsleitungen vorgesehen sind, wobei die Verbindungsleitungen eine Bezugspotentialverbindungsleitung, die ein Bezugspotential führt, sowie eine Daten- und Energieversorgungsverbindungsleitung, die das Signalgerät sowohl mit Energie versorgt, als auch zur Übermittlung von Daten dient, umfassen. Bei dieser Variante der Erfindung ist daher vorgesehen, dass die Übermittlung der Daten und die Übertragung der Energie über eine gemeinsame Verbindungsleitung erfolgt. Die zwei Verbindungsleitungen verbinden die zwei Ausgangskontakte der speicherprogrammierbaren Steuerung mit den zwei Signalgerätkontakten des Signalgeräts. Auch bei dieser Ausführungsform werden Daten und Energie von der speicherprogrammierbaren Steuerung an das Signalgerät übertragen. Da die Datenübermittlung die Energieübertragung vorübergehend unterbrechen kann, kann das Signalgerät ein elektrisches Energiespeicherelement, beispielsweise einen Kondensator oder einen Akkumulator, aufweisen. Auf diese Weise bleibt die Energieversorgung des Signalgeräts gewährleistet, während eine Datenübermittlung stattfindet, bei der der Spannungspegel reduziert wird, insbesondere auf das Bezugspotential, vorzugsweise 0 V, reduziert wird. Das Speicherelement wird demnach geladen, wenn der Spannungslevel vom Bezugspotential abweicht, insbesondere erhöht ist, also beispielsweise dem oben beschriebenen zweiten Spannungslevel entspricht. Dies ist insbesondere der Fall, wenn gerade keine Daten übermittelt werden oder der zweite Spannungslevel während der Datenübermittlung verwendet wird. Das Energiespeicherelement ist in Bezug auf seine Größe vorzugsweise derart dimensioniert, dass die Energieversorgung des Signalgeräts für Zeiträume ermöglicht ist, in denen Daten übertragen werden. Das Energiespeicherelement ist vorzugsweise mit der Steuerungseinheit, einer Leuchteinheit, einer Toneinheit und/oder der Daten- und Energieversorgungsverbindungsleitung direkt oder indirekt elektrisch verbunden. Wenn das Energiespeicherelement einen Kondensator aufweist, kann dieser beispielsweise eine Kapazität zwischen 10 µF und 100 µF aufweisen. Erwähnt sei, dass mehr als zwei Signalgerätkontakte und/oder mehr als zwei Ausgangskontakte vorgesehen sein können, von denen jeweils nur zwei Signalgerätkontakte bzw. nur zwei Ausgangskontakte zur Verbindung zwischen dem Signalgerät und der speicherprogrammierbaren Steuerung genutzt werden.

Eine besonders günstige Variante der Erfindung im Allgemeinen ergibt sich, wenn die Daten in Form von abgeschlossenen Datenpaketen übermittelt werden. Informationen über einen Zustand und/oder Befehle können in einzelnen Datenpaketen oder in mehreren, zusammengehörigen Datenpaketen übermittelt werden. Die Daten können also insbesondere in Gruppen von aneinandergereihten Spannungslevelwechseln übertragen werden. Die Datenpakete können eine vorgegebene Länge, insbesondere eine vorgegebene Anzahl an Zeichenstellen, insbesondere einzelnen Bits, aufweisen. Die Datenpakete können insbesondere alle die gleiche Länge aufweisen. Es kann aber auch vorgesehen sein, dass die Datenpakete unterschiedliche Längen aufweisen. Die Datenpakete können beispielsweise zumindest 3 Zeichenstellen, zumindest 4 Zeichenstellen, zumindest 5 Zeichenstellen, zumindest 6 Zeichenstellen, zumindest 7 Zeichenstellen oder zumindest 8 Zeichenstellen oder ein Vielfaches von letzterem umfassen. Insbesondere sind die Zeichenstellen Bits, die zwei Zustände, insbesondere Spannungslevel, annehmen können. Die Zeichenstellen können bei einer alternativen Ausführungsform mehr als zwei Zustände annehmen. Die Zeichenstellen können direkt aneinander anschließen oder voneinander durch eine Pause beabstandet sein.

Damit das Signalgerät einen Zustand anzeigen kann, ist es vorteilhaft, wenn Zustandsdatenpakete vorgesehen sind, die Informationen über den Zustand und/oder Befehle zur Signalisierung des Zustands enthalten. Die Steuerungseinheit kann auf Basis der Informationen über den Zustand und/oder Befehle zur Signalisierung des Zustands die Leuchteinheit und/oder die Toneinheit ansteuern, um den Zustand zu signalisieren. Bei einer Ausführungsform der Erfindung kann die Steuerungseinheit auf Basis der Information über den Zustand selbst einen Befehl erzeugen, um den Zustand zu signalisieren. Wenn die Information über den Zustand beispielsweise "Anlage defekt" lautet, kann die Steuerungseinheit beispielsweise den Befehl "rotes Blinklicht" oder "durchgehender Alarmton" generieren und die Leuchteinheit und/oder die Toneinheit entsprechend ansteuern, sodass das rote Blinklicht von der Leuchteinheit und/oder der durchgehende Alarmton von der Toneinheit ausgegeben wird. Auf diese Weise können Befehle generiert werden, die von dem Signalgerät auch tatsächlich umgesetzt werden können. Das Signalgerät kann aber auch direkt den Befehl "rotes Blinklicht" oder "durchgehender Ton" erhalten und die Leuchteinheit bzw. die Toneinheit entsprechend ansteuern. Wenn das Signalgerät den Befehl nicht ausführen kann, weil beispielsweise keine in dem Befehl enthaltene Farbe vorhanden ist oder keine Toneinheit vorhanden ist, kann der Befehl von dem Signalgerät bei einer Ausführungsform uminterpretiert oder ein Ersatzbefehl ausgeführt werden. Alternativ kann ein solcher Befehl, der nicht ausführbar ist, von dem Signalgerät ignoriert werden. Der Einfachheit halber wurden die Informationen über den Zustand und der Befehl in lesbarer Sprache beschrieben. Bei einer konkreten Umsetzung können der Zustand und der Befehl selbstverständlich einem eindeutigen insbesondere binären Muster zugeordnet sein. Befehle zur Signalisierung des Zustands können beispielsweise Anweisungen über zu signalisierende Farben, Töne, Farbmuster, Farbanimationen, wie etwa Lauf- oder Blinklichtanmitationen, zeitliche Farbabfolgen, Lichtstärken, etc. umfassen. Die Befehle können zum Beispiel auch Anweisungen enthalten, welche Leuchteinheiten, welche Leuchtgruppen oder welche Lichtquellen aktiviert und/oder deaktiviert werden sollen.

Im Hinblick auf die korrekte Übermittlung von Daten ist es günstig, wenn die Datenpakete eine Adresse des Signalgeräts und/oder eine Prüfsumme aufweisen oder einem oder mehreren Datenpaketen ein Adressdatenpaket und/oder ein Prüfsummendatenpaket zugeordnet ist. Mit Hilfe der Prüfsumme, die auf Basis des einen oder der mehreren Datenpakete generiert werden kann, kann bestimmt werden, ob die Daten korrekt übermittelt wurden. Die Prüfsumme kann beispielsweise mit einem CRC8-Algorithmus generiert werden. Dem Signalgerät kann eine eindeutige Adresse zugeordnet sein. Wenn die Datenpakete jeweils eine Adresse aufweisen oder einem oder mehreren Datenpaketen ein Adressdatenpaket zugeordnet ist, können die Datenpakete dem betreffenden Signalgerät übermittelt werden, wenn die Verbindungsleitungen neben der speicherprogrammierbaren Steuerung und dem Signalgerät mit weiteren Geräten, insbesondere weiteren Signalgeräten, verbunden sind. Die Adresse kann beispielsweise 8 Zeichenstellen, insbesondere Bits, aufweisen. Die Prüfsumme kann beispielsweise 8 Zeichenstellen, insbesondere Bits, aufweisen. Wenn einem oder mehreren Datenpaketen ein Adressdatenpaket und/oder ein Prüfsummendatenpaket zugeordnet ist, können diese dem einen oder den mehreren Datenpaketen beispielsweise vor- und/oder nachgereiht sein.

Bei einer Ausführungsform der Erfindung ist eine Initialisierungssequenz vorgesehen, welche von der speicherprogrammierbaren Steuerung an das Signalgerät übermittelt wird, um das Signalgerät für eine Kommunikation mit der speicherprogrammierbaren Steuerung zu initialisieren, vorzugsweise wobei die Initialisierungssequenz eine Datenübertragungsrate bei der Übermittlung der Daten vorgibt. Die Initialisierungssequenz kann zu Beginn der Datenübermittlung, vorzugsweise nach dem Einschalten der speicherprogrammierbaren Steuerung oder Aktivieren des erfindungsgemäßen Verfahrens, übermittelt werden. Möglich ist aber auch, dass die Initialisierungssequenz vor jedem oder vor einer vorgegeben Anzahl an Datenpaketen übermittelt wird. Die Initialisierungssequenz kann eine vorgegebene Abfolge von Zeichen, insbesondere von Bits, d.h. eine vorgegebene Abfolge von Spannungsleveln, aufweisen, die dem Signalgerät signalisieren, dass das erfindungsgemäße Verfahren angewendet werden soll. Es können auch mehrere Initialisierungssequenzen vorgesehen sein. Bei einer bevorzugten Ausführungsform der Erfindung enthält die Initialisierungssequenz auch Informationen über die Verbindungsart oder Verbindungstechnik, wie verwendete Spannungslevel, Anzahl an Verbindungsleitungen, Größe der Datenpakete, Art der übermittelten Daten und/oder die Datenübertragungsrate. Bei der Art der übermittelten Daten kann beispielsweise vorgesehen sein, dass die auf die Initialisierungssequenz folgenden Daten nur für die Leuchteinheit bestimmt sind. Das Signalgerät kann bei einer Ausführungsform der Erfindung Informationen über die Verbindungsart oder Verbindungstechnik aus der Initialisierungssequenz, insbesondere aus den verwendeten Spannungsleveln, der Frequenz oder der Zeichendauer, ableiten. Die verwendete Form der Initialisierungssequenz, insbesondere die Zeichenabfolge, kann dem Signalgerät bekannt sein.

Es kann vorgesehen sein, dass das Signalgerät in einem ersten Modus, in welchem eine serielle Datenkommunikation mit der speicherprogrammierbaren Steuerung ermöglicht ist, und in einen zweiten Modus, in welchem die Übermittlung von Informationen über den Zustand und/oder Befehle zur Signalisierung des Zustands durch Anlegen eines parallelen Schaltmusters an den Ausgangskontakten der speicherprogrammierbaren Steuerung ermöglicht ist, betreibbar ist. Bei dieser Ausführungsform kann das Signalgerät auf zwei Arten betrieben werden. Der erste Modus umfasst die oben beschriebene serielle Datenkommunikation mit der speicherprogrammierbaren Steuerung, bei der das Signalgerät vorzugsweise direkt mit der speicherprogrammierbaren Steuerung verbunden ist. Das Signalgerät kann beispielsweise in den ersten Modus wechseln, wenn die oben beschriebene Initialisierungssequenz empfangen wird. Der zweite Modus umfasst eine Datenkommunikation, bei der in Abhängigkeit von der angelegten Spannung an parallelen Signalgerätkontakten Informationen über den Zustand und/oder Befehle zur Signalisierung des Zustands übermittelt werden. Der zweite Modus erfordert in Abhängigkeit der Zustände bzw. Befehle eine höhere Anzahl an Signalgerätkontakten. Bei n Signalgerätkontakten kann einer das Bezugspotential tragen, sodass nur noch n-1 Signalgerätekontakte zur Datenkommunikation bzw. Übertragung der Zustände und/oder Informationen zur Verfügung stehen. Somit können 2⁽ⁿ⁻¹⁾-1 verschiedene Zustände bzw. Befehle übertragen werden, wobei n eine natürliche Zahl ist. Ein Zustand wird von der möglichen Anzahl der Zustände abgezogen, da keine Energie übertragen wird, wenn sämtliche an die Signalgerätkontakte angeschlossenen Leitungen das Bezugspotential führen. Bei n=4 Signalgerätkontakten können demnach sieben Zustände bzw. Befehle an das Signalgerät übermittelt werden. In dem zweiten Modus werden Daten parallel und statisch übertragen.

Das Signalgerät kann den ersten und den zweiten Modus einprogrammiert haben, beispielsweise in Form einer Firmware, die in einer Steuerungseinheit des Signalgeräts gespeichert ist. Wird das Signalgerät erstmals oder nach einer bestimmten Zeitdauer erneut aktiviert oder mit Spannung versorgt, wird überprüft, ob an einem vorgesehenen Signalgerätekontakt, der für die serielle Datenkommunikation vorgesehen ist, eine Initialisierungssequenz empfangen wird. Ist dies der Fall, wird automatisch der erste Modus aktiviert und eine anschließende serielle Datenkommunikation erwartet. Wird keine Initialisierungssequenz erkannt, beispielsweise für eine vorgegebene Zeitspanne, dann wird der zweite Modus aktiviert. Das Signalgerät führt im zweiten Modus jene Funktionen aus, die sich durch das Anlegen des parallelen Schaltmusters gemäß seiner Programmierung ergeben.

In einer bevorzugten Ausführungsform der Erfindung werden mehr Signalgerätekontakte ausgeführt als für den ersten Modus zur seriellen Datenkommunikation vorgesehen oder erforderlich wären, die wiederum mit der entsprechenden Anzahl an Ausgangskontakten der SPS verbunden sind. Auf diese Weise kann das Signalgerät sowohl im ersten, als auch im zweiten Modus parallel betrieben werden. Für eine besonders zeitkritische Situation, beispielsweise wenn Gefahr für Personen vorliegt, kann es nämlich von Interesse sein, dass das Signalgerät ohne für einen Menschen erkennbaren Zeitverzug, vorzugswiese unter 50 ms, insbesondere unter 30 ms, unter 25 ms, unter 20 ms, unter 10 ms oder unter 5 ms, reagiert. Ein solcher Zeitverzug bezieht sich auf die Zeit, die zwischen der Ausgabe des Signals an einem Ausgangskontakt der speicherprogrammierbaren Steuerung bis zur Signalisierung des Zustands durch die Signalvorrichtung vergeht. Ein Zeitverzug kann sich im ersten Modus durch die serielle Kommunikation ergeben, was aber für den Normalbetrieb, wenn keine Gefahr vorliegt, kein Problem darstellt. In zeitkritischen Anwendungen kann bei Anlegen einer Spannung an einen oder mehrere Signalgerätkontakte, der/die nicht für den ersten Modus der seriellen Kommunikation verwendet wird, das Signalgerät veranlasst werden, sofort, ohne auf eine Befehlsinterpretation der seriellen Daten wartend, eine Funktion auszuführen, beispielsweise über eine Leuchteinheit rot blitzendes Licht oder über eine akustische Toneinheit einen lauten Signalton auszugeben.

Der gleiche Effekt kann beispielsweise mit zwei Ausgangskontakten der SPS erzielt werden, wenn jener Ausgangskontakt, über den die elektrische Energie von der speicherprogrammierbaren Steuerung an das Signalgerät übermittelt wird, zusätzlich genutzt wird, um umgehend Informationen über den Zustand und/oder Befehle zur Signalisierung des Zustands an das Signalgerät zu übermitteln. Beispielsweise kann die elektrische Spannung an jenem Ausgangskontakt, über den die Energie an das Signalgerät übermittelt wird, verändert, insbesondere abgeschaltet, werden, um umgehend eine bestimmte Information über den Zustand und/oder einen bestimmten Befehl zur Signalisierung des Zustands zu übermitteln. Zusätzlich kann dabei die Spannung am datenübertragenden Ausgangskontakt ebenfalls verändert, vorzugsweise auf Dauer-Ein, also ohne Unterbrechung durch eine Datenübertragung, geschaltet werden. Das Signalgerät kann in diesem Fall sofort eine dringende Funktion erkennen und ausführen. Dabei ist auch die Energieversorgung sichergestellt, entweder durch den optional auf Dauer-Ein geschalteten Ausgangskontakt für die Datenübertragung an der speicherprogrammierbaren Steuerung oder ein Energiespeicherelement in dem Signalgerät. Möglich ist auch, dass eine Information über den Zustand und/oder ein Befehl zur Signalisierung des Zustands umgehend übermittelt wird, indem der Ausgangskontakt für die Datenkommunikation auf einen Spannungspegel geschaltet wird, der sich von den Spannungsleveln zur Datenkommunikation unterscheidet.

Vorzugweise sind die zumindest zwei Signalgerätkontakte mit einer Steuerungseinheit des Signalgeräts verbunden, sodass Daten, die von der speicherprogrammierbaren Steuerung übertragen werden, vorzugsweise direkt an die Steuerungseinheit übermittelt werden. Bei der Steuerungseinheit kann es sich beispielsweise um einen Mikrocontroller oder einen Mikroprozessor handeln. Die Steuerungseinheit kann ein Steuerungsprogramm ausführen. Die Steuerungseinheit kann die zumindest eine Leuchteinheit und/oder die zumindest eine Toneinheit ansteuern. Die Ansteuerung kann beispielsweise direkt oder indirekt über die Ansteuerung von Verstärkereinheiten erfolgen.

Vorteilhaft ist, wenn die Steuerungseinheit die Daten auswertet und auf Basis der ausgewerteten Daten zumindest eine optische Leuchteinheit und/oder akustische Toneinheit des Signalgeräts einstellt. Die optische Leuchteinheit und/oder die akustische Toneinheit kann direkt oder indirekt über Verstärkereinheiten von den Ausgängen der Steuerungseinheit angesteuert werden. Die Daten können Befehle enthalten, die von der Steuerungseinheit durch Ansteuerung der optischen Leuchteinheit und/oder der akustischen Toneinheit umgesetzt werden. Wenn die Daten Informationen über den Zustand enthalten, kann die Steuerungseinheit selbst entsprechende Befehle zur Signalisierung des Zustands erstellen, die von dem Signalgerät umgesetzt werden können.

Bei einer Ausführungsform der Erfindung kann vorgesehen sein, dass parallel zum Signalgerät ein weiteres Signalgerät mit den Signalgerätkontakten des Signalgeräts verbunden ist, wobei dem Signalgerät eine Adresse und dem weiteren Signalgerät eine weitere Adresse zugeordnet ist und die speicherprogrammierbare Steuerung das Signalgerät und das weitere Signalgerät über die Adresse ansteuert. Das Signalgerät und das weitere Signalgerät können elektrisch parallel an den Ausgangskontakten der speicherprogrammierbaren Steuerung angeschlossen sein. Zu diesem Zweck können das Signalgerät und das weitere Signalgerät über jeweils eigene Verbindungsleitungen mit den Ausgangskontakten der speicherprogrammierbaren Steuerung verbunden sein. Alternativ kann vorgesehen sein, dass die Signalgeräte hintereinandergeschaltet sind. Zu diesem Zweck kann das weitere Signalgerät mit eigenen Verbindungsleitungen mit dem Signalgerät, insbesondere dessen Signalgerätkontakten, verbunden sein. Auch ein Durchschleifen der Daten und ein Weiterleiten der Energie von dem Signalgerät an das weitere Signalgerät ist möglich. Jedes Signalgerät kann mit der jeweils zugeordneten Adresse angesprochen werden. Dabei interpretiert ein Signalgerät vorzugsweise nur jene Daten, die an das Signalgerät adressiert sind. Insbesondere führt ein Signalgerät vorzugsweise Befehle aus, wenn die dazugehörigen Daten auch an das Signalgerät adressiert sind.

Die Erfindung betrifft auch ein System zur optischen und/oder akustischen Wiedergabe eines Zustands, aufweisend:
eine speicherprogrammierbare Steuerung mit zumindest einem, vorzugsweise zumindest zwei, Ausgangskontakt/en;
ein Signalgerät mit zumindest zwei Signalgerätkontakten zur Ansteuerung und Energieversorgung des Signalgeräts,
dadurch gekennzeichnet, dass zumindest ein Signalgerätkontakt des Signalgeräts mit einer Verbindungsleitung direkt an einen elektrischen Ausgangskontakt der speicherprogrammierbaren Steuerung angeschlossen ist, sodass die elektrische Verbindung zwischen dem Ausgangskontakt und dem Signalgerätkontakt frei von aktiven elektronischen Bauelementen ist, und die speicherprogrammierbare Steuerung dazu eingerichtet ist, an dem elektrischen Ausgangskontakt serielle Daten an das Signalgerät zu übermitteln, vorzugsweise wobei die speicherprogrammierbare Steuerung dazu eingerichtet ist, an demselben Ausgangskontakt über die Verbindungsleitung oder an einem anderen Ausgangskontakt der speicherprogrammierbaren Steuerung über eine andere Verbindungsleitung elektrische Energie an das Signalgerät zu übertragen.

Die oben in Zusammenhang mit dem Verfahren zum Betreiben eines Signalgeräts beschriebenen Vorteile, Merkmale und Effekte sind auf das System zur optischen und/oder akustischen Wiedergabe eines Zustands analog übertragbar. Bevorzugt ist, wenn auch die Verbindungsleitung, über die elektrische Energie von der speicherprogrammierbaren Steuerung and das Signalgerät übermittelt wird, eine direkte Verbindung zwischen dem Signalgerät und der speicherprogrammierbaren Steuerung darstellt.

Bei einer Ausführungsform der Erfindung ist vorgesehen, dass der zumindest eine Ausgangskontakt und/oder die zumindest zwei Signalgerätkontakte in einem Steckverbindungselement enthalten sind. Ein solches Steckverbindungselement kann als Stecker oder als Kupplung ausgebildet sein. Die Enden der Verbindungsleitungen können in passenden weiteren Steckverbindungselementen eingefügt sein. Somit kann zwischen den Verbindungsleitungen und dem Signalgerät und/oder der speicherprogrammierbaren Steuerung eine Steckverbindung hergestellt werden, über welche Daten übermittelt und Energie übertragen werden kann. Die Steckverbindungselemente können auch weitere Signalgerätkontakte oder Ausgangskontakte enthalten, die von dem erfindungsgemäßen System bzw. dem erfindungsgemäßen Verfahren nicht genutzt werden.

Die Erfindung betrifft auch ein Computerprogrammprodukt, d.h. ein Computerprogramm, welches bei dem oben beschriebenen Verfahren zum Betreiben eines Signalgeräts eingesetzt werden kann und insbesondere auf einem Prozessor einer speicherprogrammierbaren Steuerung implementiert sein und betrieben werden kann. Das Computerprogrammprodukt umfasst Befehle, die bei der Ausführung des Programms durch eine speicherprogrammierbare Steuerung diese veranlassen, an zumindest einem elektrischen Ausgangskontakt der speicherprogrammierbaren Steuerung serielle Daten an das Signalgerät zu übermitteln und vorzugsweise an demselben zumindest einen elektrischen Ausgangskontakt oder an zumindest einem anderen elektrischen Ausgangskontakt der speicherprogrammierbaren Steuerung elektrische Energie an das Signalgerät zu übertragen. Das Computerprogrammprodukt kann auf das Signalgerät abgestimmt sein, sodass nur Informationen über den Zustand und/oder Befehle an das Signalgerät übertragen werden, die von diesem verarbeitet und wiedergegeben werden können. Das Computerprogrammprodukt kann beispielsweise von einem Betreiber einer Industrieanlage oder eine Maschine bezogen und an die jeweiligen Bedürfnisse angepasst werden. Beispielsweise können Befehle angepasst und mit bestimmten Zuständen verknüpft werden. Bei einem Beispiel kann ein Warnzustand mit einem Befehl zur Ausgabe eines roten Blinklichts verknüpft werden. Wenn eine Maschine oder Anlage nun in den Warnzustand übergeht und dies der speicherprogrammierbaren Steuerung mitteilt oder die speicherprogrammierbare Steuerung die Maschine oder Anlage in diesen Warnzustand versetzt, kann der entsprechende Befehl an das Signalgerät übermittelt werden, welches nun ein rotes Blinklicht ausgibt. Der Betreiber kann den Warnzustand auch mit einem anderen Befehl verknüpfen, beispielsweise zur Ausgabe eines orangen Dauerlichts.

Die oben in Zusammenhang mit dem Verfahren zum Betreiben eines Signalgeräts beschriebenen Vorteile, Merkmale und Effekte sind auf das Computerprogrammprodukt übertragbar.

Nachfolgend wird die Erfindung anhand von Figuren beschrieben, auf die sie jedoch nicht beschränkt sein soll.

Es zeigen:
Fig. 1 ein Signalgerät;
Fig. 2 schematisch ein Signalgerät, das mit einer speicherprogrammierbaren Steuerung verbunden ist, gemäß einer ersten Ausführungsform;
Fig. 3 die Übermittlung von Daten mittels Datenpaketen, wobei zwei Spannungslevel ersichtlich sind;
Fig. 4 die Übermittlung von Daten mittels Datenpaketen;
Fig. 5 schematisch ein Signalgerät, das mit einer speicherprogrammierbaren Steuerung verbunden ist, gemäß einer zweiten Ausführungsform;
Fig. 6 schematisch mehrere Signalgeräte, die an einer speicherprogrammierbaren Steuerung angeschlossen sind;
Fig. 7 ein Signalgerät mit einem Steckerverbindungselement in einem unteren Bereich; und
Fig. 8 schematisch die Umsetzung eines weiteren Modus zur Ansteuerung des Signalgeräts.

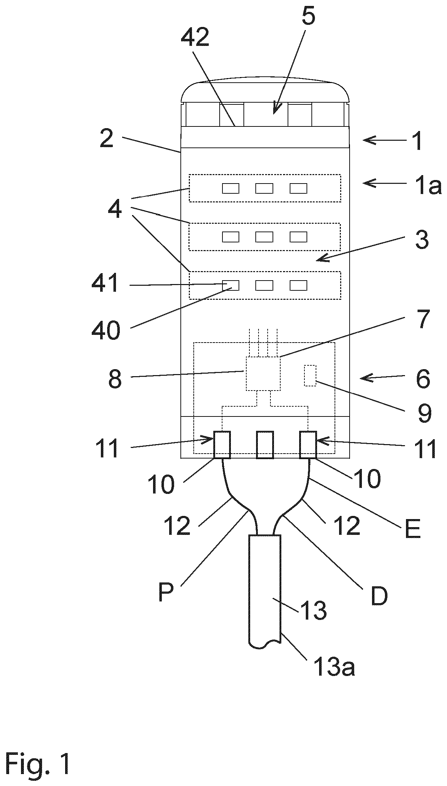

Fig. 1 zeigt ein als Signalsäule 1a ausgebildetes Signalgerät 1 mit einem Gehäuse 2, in welchem eine optische Leuchteinheit 3, die übereinander angeordnete Leuchtgruppen 4 aufweist, sowie eine akustische Toneinheit 5 angeordnet sind. Die Leuchtgruppen 4 können jeweils eine oder mehrere Lichtquellen 40, wie etwa LEDs 41, aufweisen. Die Lichtquellen 40 einer Leuchtgruppe 4 können beispielsweise unterschiedliche Farben besitzen und individuell ansteuerbar sein. Die Lichtstärke der Lichtquellen 40 wird vorzugsweise mittels einer PWM (Puls Weiten Modulation) eingestellt werden. Die Toneinheit 5 kann eine Tonquelle, wie etwa einen oder mehrere Lautsprecher 42, aufweisen.

Das Signalgerät 1 weist in einem unteren Bereich einen Sockel 6 auf. Innerhalb des Sockels 6 kann eine strichliert angedeutete Steuerungseinheit 7 in Form eines Mikrocontrollers 8 angeordnet sein, die die Leuchteinheit 3 und die Toneinheit 5 ansteuert. Auf diese Weise können mit dem Signalgerät 1 verschiedene Farben, Farbmuster, Farbverläufe und zeitliche Farbabfolgen sowie Töne erzeugt und ausgegeben werden. Die Steuerungseinheit 7 kann die Leuchteinheit 3 und/oder die Toneinheit 5 direkt oder indirekt über Verstärkerstufen (nicht gezeigt) ansteuern. Innerhalb des Sockels 6 kann auch ein unten noch näher zu beschreibendes Energiespeicherelement 9 vorgesehen sein. Die Steuerungseinheit 7 ist dazu ausgebildet, ein oder mehrere Programme auszuführen.

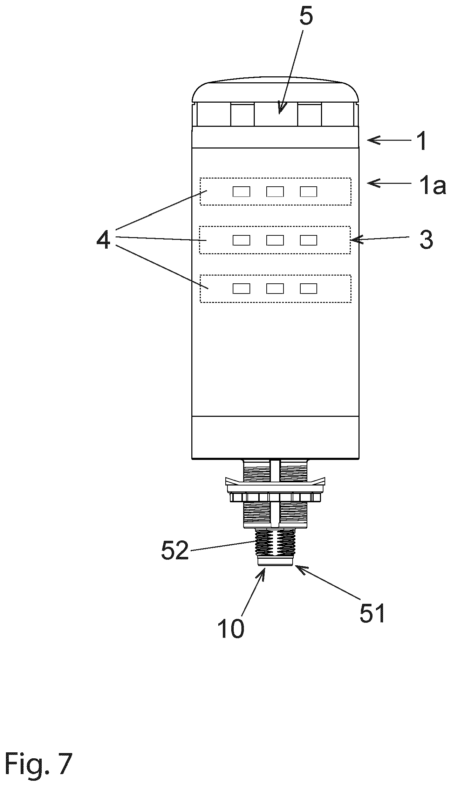

Zum Empfang von Daten D und Energie E weist das Signalgerät 1 zumindest zwei Signalgerätkontakte 10 auf, die mit der Steuerungseinheit 7 elektrisch, vorzugsweise direkt elektrisch ohne zwischengeschaltete aktive und/oder passive elektrische Bauelemente, verbunden sind. Die Signalgerätkontakte 10 können mechanische Verbindungsmittel 11 zur Befestigung von Verbindungsleitungen 12 aufweisen. Die Verbindungsleitungen 12 können in ein Kabel 13 mit einer Ummantelung 13a integriert sein. Möglich ist aber auch, dass die Verbindungsleitungen 12 voneinander separat angeordnet sind. Auch die Verbindungsleitungen 12 sind jeweils zu deren Schutz und Abschirmung ummantelt. Die Signalgerätkontakte 10 können auch in einem Steckverbindungselement 51 enthalten sein (siehe Fig. 7).

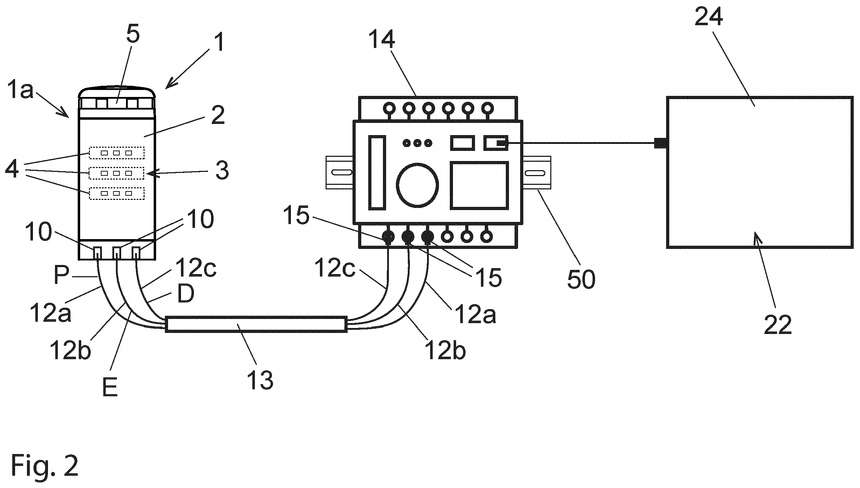

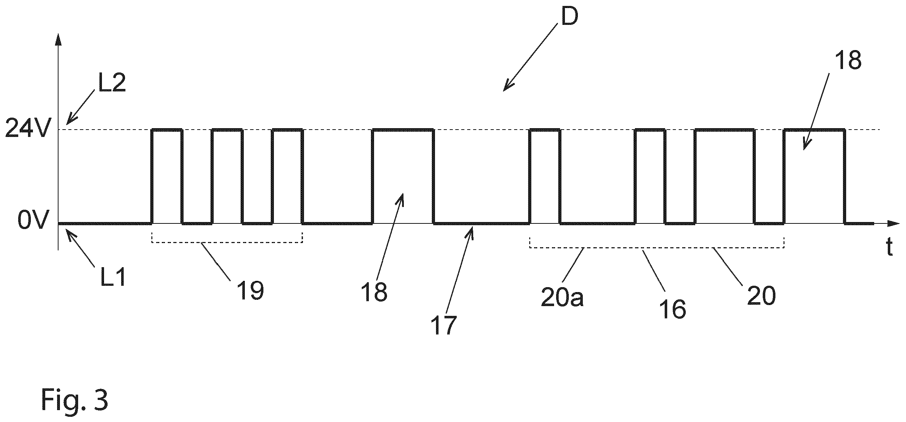

Fig. 2 zeigt ein Signalgerät 1, das über drei Verbindungsleitungen 12 mit einer an einer Hutschiene 50 lösbar befestigten speicherprogrammierbaren Steuerung 14 (SPS) verbunden ist, gemäß einer ersten Ausführungsform. Die Verbindungsleitungen 12 sind direkt elektrisch, d.h. ohne dazwischengeschaltetes aktive und/oder passive elektrische Bauelemente, mit Ausgangskontakten 15 der speicherprogrammierbaren Steuerung 14 sowie mit den Signalgerätkontakten 10 verbunden. Mit anderen Worten sind die Signalgerätkontakte 10 ausschließlich über Verbindungsleitungen 12 und gegebenenfalls Steckverbindungselemente 51 mit den Ausgangskontakten 15 verbunden, ohne dass elektrische Bauelemente dazwischengeschaltet werden. Etwaige Steckverbindungselemente 51 können jedoch verwendet werden, ohne dass dies einer direkten elektrischen Verbindung entgegenstehen würde. Bei den Ausgangskontakten 15 handelt es sich bei der vorliegenden Ausführungsform um Kontakte, über welche eine elektrische Leistung von zumindest 0,5 W abrufbar ist. Wie auch die Signalgerätkontakte 10 können auch die Ausgangskontakte 15 mechanische Verbindungsmittel zur Befestigung der Verbindungsleitungen 12 aufweisen (nicht gezeigt). Die drei Verbindungsleitungen 12 umfassen eine Bezugspotentialverbindungsleitung 12a, die ein Bezugspotential P führt, eine Energieversorgungsverbindungsleitung 12b, die das Signalgerät 1 mit elektrischer Energie E versorgt, sowie eine Datenverbindungsleitung 12c, die Daten D an das Signalgerät 1 übermittelt. Bei der gezeigten Ausführungsform ist demnach die Übertragung der elektrischen Energie E von der Übermittlung der Daten D durch die Verwendung unterschiedlicher Verbindungsleitungen 12b, 12c getrennt. Die Energieversorgungsverbindungsleitung 12b kann beispielsweise eine Gleichspannung von 24 V führen. Die Datenverbindungsleitung 12c kann Daten D digital und binär durch Abwechseln von zwei Spannungsleveln L1 und L2 übermitteln (siehe Fig. 3). Mit der speicherprogrammierbaren Steuerung 14 ist des Weiteren eine Anlage 24 zum Datenaustausch verbunden. Bei der Anlage 24 kann es sich um eine industrielle Anlage 24, wie beispielsweise eine Fertigungsanlage, handeln, die verschiedene Zustände 22 annehmen kann. Bei einem Zustand 22 kann es sich beispielsweise um einen Betriebszustand, einen Warnzustand oder um einen Fehlerzustand handeln. Der Zustand 22 kann von der speicherprogrammierbaren Steuerung 14 erfasst oder von der Anlage 24 selbst an diese übermittelt werden. Die speicherprogrammierbare Steuerung 14 kann den Zustand 22 oder einen Befehl 23 zur Signalisierung des Zustands 22 über die Verbindungsleitungen 12 an das Signalgerät 1 übermitteln. Das Signalgerät 1 kann diesen Zustand der Anlage 24 dann optisch und/oder akustisch signalisieren.

Fig. 3 zeigt eine beispielhafte Datenübermittlung von der speicherprogrammierbaren Steuerung 14 an das Signalgerät 1 über die Zeit t. Der erste Spannungslevel L1 kann beispielsweise 0 V relativ zu dem Potential P betragen. Der zweite Spannungslevel L2 kann beispielsweise 24 V betragen. Der Spannungslevel L1 kann beispielsweise einer binären "0" entsprechen. Der zweite Spannungslevel kann beispielsweise einer binären "1" entsprechen. Selbstverständlich kann die Zuordnung auch umgekehrt sein und andere Spannungspotentiale verwendet werden. Ein Spannungslevel L1, L2 kann demnach ein Bit darstellen. Die Daten D können mithilfe von Datenpaketen 16 von der speicherprogrammierbaren Steuerung 14 seriell an das Signalgerät 1 übermittelt werden. Die Datenpakete 16 können durch zeitlich gruppierte Bits, d.h. Spannungslevel L1, L2, mit vorgegebener Anzahl gebildet sein. Die Datenpakete 16 können jeweils Startbits 17 und/oder Stopbits 18 aufweisen oder durch diese eingeleitet und beendet werden. Vor dem ersten in Fig. 3 dargestellten Datenpaket 16 ist eine Initialisierungssequenz 19 vorgesehen, welche ebenfalls von einem Stopbit 18 beendet wird. Die Initialisierungssequenz 19 umfasst in der gezeigten Darstellung sechs Bits mit alternierenden Spannungsleveln L1, L2. Es kann auch eine andere Anzahl an Bits für die Initialisierung vorgesehen werden. Mit der Initialisierungssequenz 19 kann dem Signalgerät 1 mitgeteilt werden, dass das erfindungsgemäße Verfahren ausgeführt werden soll, insbesondere in einem ersten Modus. Es kann dem Signalgerät 1 auch mitgeteilt werden, welche Art von Daten D folgen, beispielsweise eine vereinfachte kürzere Datenstruktur für einfach aufgebaute Signalgeräte 1, die zum Beispiel weniger Leuchteinheiten 4 oder nur eine akustische Toneinheit 5 aufweisen. Möglich ist auch, dass mit der Initialisierungssequenz 19 längere Datenstrukturen mit mehr Informationen angekündigt werden. Auch kann über die Initialisierungssequenz 19 die Art der Daten D festgelegt werden, beispielsweise, dass sie nur für eine akustische Toneinheit 5 oder nur für eine Leuchteinheit 4 gelten. Falls eine solche Initialisierungssequenz 19 nicht oder bei einer Ausführungsform nicht in regelmäßigen Abständen übermittelt wird, kann das Signalgerät 1 in einen anderen Betriebsmodus schalten (zweiter Modus). Auf Basis der Initialisierungssequenz 19 kann das Signalgerät 1 eine Datenübertragungsrate und verwendete Spannungslevel L1, L2 ableiten. Nach der Initialisierungssequenz 19 und dem Stopbit 18 wird mit einem Startbit 17 ein Datenpaket 16 angekündigt, welches beispielsweise eine Adresse 20 aufweisen kann. Dieses Datenpaket 16 wird mit einem Stopbit 18 beendet.

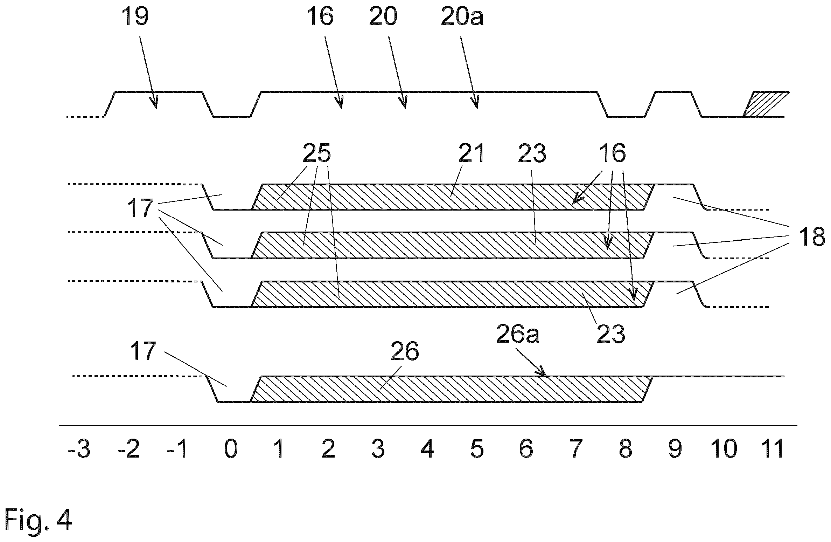

Fig. 4 zeigt schematisch mehrere hintereinander übermittelte Datenpakete 16, die aus Gründen der Übersicht in übereinander angeordneten Zeilen dargestellt sind. Die Zeilen hängen jedoch zusammen. Die Datenpakete sind schematisch dargestellt, einzelne Bits sind nicht erkennbar. Nach der Initialisierungssequenz 19 ist ein Adressdatenpaket 20a mit einer Adresse 20 eines Signalgeräts 1 vorgesehen. Dieses Datenpaket 16 kann auch entfallen, wenn nur ein einziges Signalgerät 1 mit den Ausgangskontakten 15 der speicherprogrammierbaren Steuerung 14 verbunden ist. Nach dem Datenpaket 16 mit der Adresse 20 folgt zumindest ein Datenpaket 16 mit Informationen 21 über den Zustand 22 und/oder Befehle 23 zur Signalisierung des Zustands der Anlage 24. Solche Datenpakete 16 können auch als Zustandsdatenpakete 25 angesehen werden, da sie den Zustand 22 betreffen. Ein Zustand 22 kann beispielsweise ein Fehlerzustand der Anlage 24 sein. Bei einer Ausführungsform der Erfindung kann das Signalgerät 1, insbesondere die Steuerungseinheit 7, auf Basis des Zustands 22 einen Befehl ableiten und die Leuchteinheit 3 und/oder die Toneinheit 5 entsprechend ansteuern und den Zustand optisch und/oder akustisch signalisieren, beispielsweise durch ein rotes Blinklicht mit einem durchgehenden Warnton. Bei einer zweiten Ausführungsform der Erfindung wird der Befehl 23 von der speicherprogrammierbaren Steuerung 14 oder der Anlage 24 vorgegeben und an das Signalgerät 1 weitergeleitet, welches den Befehl 23 durch Ansteuerung der Leuchteinheit 3 und/oder der Toneinheit 5 umsetzt. Wenn der Befehl 23 von dem Signalgerät 1 nicht umgesetzt werden kann, kann der Befehl 23 auch uminterpretiert und umgesetzt oder ignoriert werden. In der gezeigten Ausführungsform werden drei Zustandsdatenpakete 25 übermittelt. Diese könne beispielsweise die Information 21 über den Zustand 22 enthalten, dass ein Warnzustand vorliegt. Ein weiteres Zustandsdatenpaket 25 kann den Befehl 23 enthalten, dass ein rotes Blinklicht mit einer Frequenz von 2 Hz ausgegeben werden soll. Ein weiteres Zustandsdatenpaket 25 kann beispielsweise den Befehl 23 enthalten, dass ein Signalton für 1 Minute ausgegeben werden soll. Es ist auch möglich, dass umfangreichere Informationen über mehrere Datenpakete 16 hinweg übermittelt werden. Nach einer vorzugsweise vorgegebenen Anzahl an Datenpaketen 16 wird ein Prüfsummendatenpaket 26a mit einer Prüfsumme 26 übertragen. Die Prüfsumme wird beispielsweise mit einem CRC8-Algorithmus erstellt bzw. ausgewertet.

Erwähnt sei an dieser Stelle, dass die Initialisierungssequenz 19 nicht nur einmal zu Beginn des Verfahrens, sondern auch öfter übermittelt werden kann, beispielsweise vor jeder geplanten Übermittlung von Adressdatenpaketen 20a, Zustandsdatenpaketen 25 und Prüfsummendatenpaketen 26a, wie in Fig. 4 gezeigt.

Die Übermittlung der Daten D kann synchron oder asynchron ausgestaltet sein. Bei einer synchronen Datenübermittlung kann eine weitere Verbindungsleitung 12 für ein Taktsignal vorgesehen sein. Noch mehr bevorzugt ist jedoch, wenn vom Signalgerät 1 ein Taktsignal aus den übermittelten Daten D rückgewonnen wird. Zu diesem Zweck können Start- 17 und Stopbits 18 vorgesehen sein. Die Datenübertragungsrate der übermittelten Daten D kann zwischen 50 Baud/s und 700 Baud/s, insbesondere zwischen 100 Baud/s und 500 Baud/s, betragen.

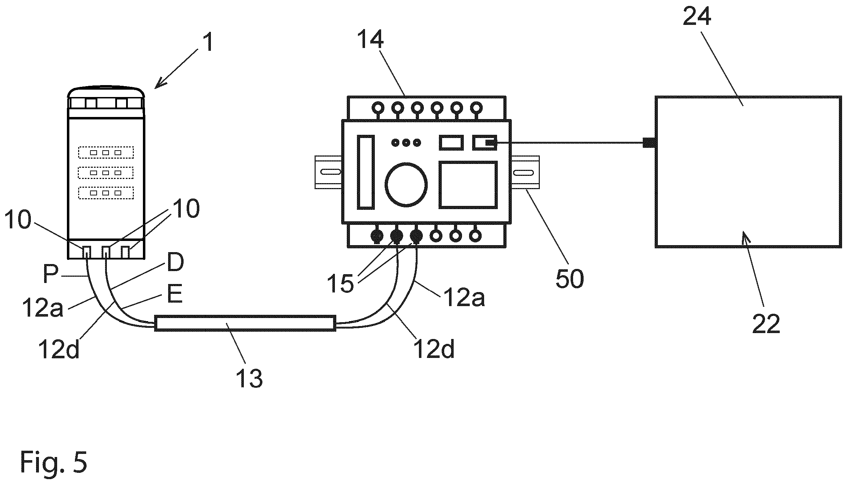

Fig. 5 zeigt eine alternative Variante der Erfindung, bei der genau zwei Signalgerätkontakte 10 des Signalgeräts 1 über genau zwei Verbindungsleitungen 12 mit genau zwei Ausgangskontakten 15 der speicherprogrammierbaren Steuerung 14 direkt, d.h. ohne zwischengeschaltete aktive oder passive elektrische Bauelemente, verbunden sind. Mit anderen Worten sind die Signalgerätkontakte 10 ausschließlich über Verbindungsleitungen 12 mit den Ausgangskontakten 15 verbunden. Es können auch mehr als zwei Signalgerätkontakte 10 vorgesehen sein, die aber nicht mit der speicherprogrammierbaren Steuerung 14 verbunden sind. Bei der Ausführungsform gemäß Fig. 5 sind eine Bezugspotentialverbindungsleitung 12a, die das Bezugspotential P führt, sowie eine Daten- und Energieversorgungsverbindungsleitung 12d, die das Signalgerät 1 sowohl mit Energie E versorgt, als auch zur Übermittlung von Daten D dient, vorgesehen. Bei dieser Ausführungsform erfolgt die Übermittlung der Daten D sowie die Übertragung der elektrischen Energie E über eine gemeinsame Verbindungsleitung. Das Signalgerät wird dabei mit Energie versorgt, wenn der Spannungslevel L2 mit einer Spannung größer als 0 V vorliegt. Um die Energieversorgung des Signalgeräts 1 zu gewährleisten, ist das Energiespeicherelement 9 vorgesehen (siehe Fig. 1), welches beispielsweise ein Akkumulator oder ein Kondensator sein kann. Das Energiespeicherelement 9 wird zu Zeiten mit elektrischer Energie E geladen, wenn eine Spannung an der Verbindungsleitung 12d anliegt, die vom Bezugspotential P abweicht, insbesondere höher als 0 V ist. Dies kann beispielsweise zwischen den Datenpaketen 16 der Fall sein. Das Energiespeicherelement 9 kann direkt mit der Daten- und Energieversorgungsverbindungsleitung 12d oder mit der Steuerungseinheit 7 verbunden sein.

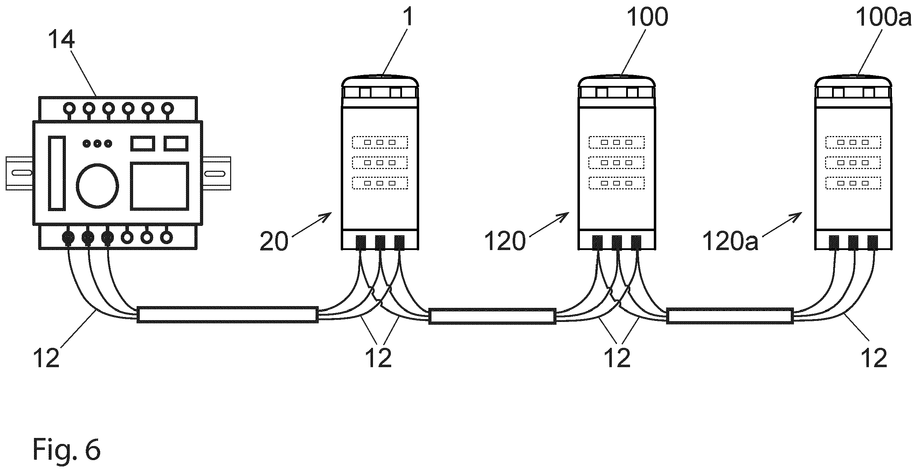

Fig. 6 zeigt eine Variante der Erfindung, bei der weitere Signalgeräte 100, 100a vorgesehen sind. Dem Signalgerät 1 ist eine Adresse 20 zugeordnet. Den weiteren Signalgeräten 100, 100a sind weitere Adressen 120, 120a zugeordnet. Das Signalgerät 100a ist mit eigenen Verbindungsleitungen 12 an den Signalgerätkontakten 10 des Signalgeräts 100 angeschlossen. Das Signalgerät 100 ist mit eigenen Verbindungsleitungen 12 an den Signalgerätkontakten 10 des Signalgeräts 1 angeschlossen. Das Signalgerät 1 ist mit eigenen Verbindungsleitungen 12 an den Ausgangskontakten 15 der speicherprogrammierbaren Steuerung 14 angeschlossen. Die speicherprogrammierbare Steuerung 14 kann unter Verwendung der Adressen 20, 120 und 120a die Signalgeräte 1, 100, 100a individuell ansteuern. Zu diesem Zweck können beispielsweise Adressdatenpakete 20 wie oben erwähnt verwendet werden.

Fig. 7 zeigt ein Signalgerät, an dessen Sockel 6 ein Steckverbindungselement 51 angeordnet ist, welches die Signalgerätkontakte 10 enthält. Das Steckverbindungselement 51 weist in der gezeigten Ausführungsform auch ein Gewinde 52 auf. Die Enden der Verbindungsleitungen 12 können in korrespondierenden Steckverbindungsgegenelementen enthalten sein (nicht gezeigt). Auch die speicherprogrammierbare Steuerung 14 kann ein Steckverbindungselement aufweisen, in welchem die Ausgangskontakte 15 enthalten sein können (ebenfalls nicht gezeigt).

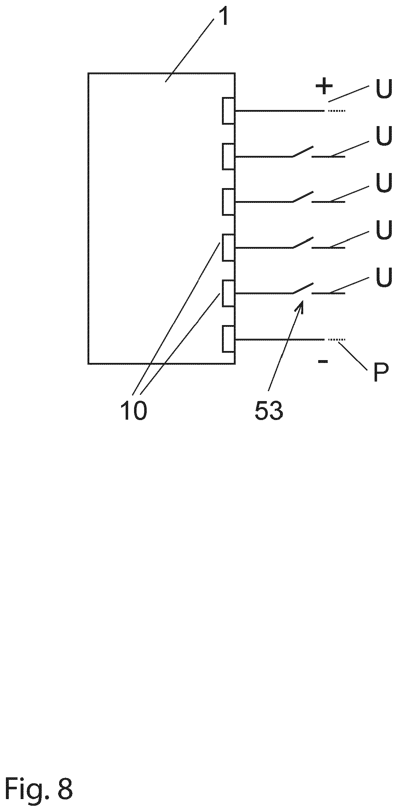

Fig. 8 zeigt die schematische Umsetzung eines weiteren Betriebsmodus des Signalgeräts 1, der auch als zweiter Modus bezeichnet werden kann. Die Ausgangskontakte 15 der speicherprogrammierbaren Steuerung 14 sind hierbei durch Schalter 53 angedeutet. Der zweite Modus umfasst eine Datenkommunikation, bei der in Abhängigkeit von der angelegten Spannung U an parallelen Signalgerätkontakten 10 Informationen 21 über den Zustand 22 und/oder Befehle 23 zur Signalisierung des Zustands 22 übermittelt werden. Wenn eine elektrische Spannung U an einem Signalgerätkontakt 10 detektiert wird, wird ein logisches Symbol (bei Bits: 0 oder 1) erfasst. Durch das Ausgeben einer Spannung U an den Ausgangskontakten 15 der speicherprogrammierbaren Steuerung 14 und Erfassen durch die Signalgerätkontakte 10 kann ein logisches Muster erzeugt werden. Mit n zur Datenkommunikation genutzten Signalgerätkontakten 10 können 2ⁿ verschiedene Muster erzeugt und erfasst werden, wobei n eine natürliche Zahl ist. In Fig. 8 ist n=4, sodass 16 Muster erzeugt und damit fünfzehn unterschiedliche Zustände 22 bzw. Befehle 23 von der speicherprogrammierbaren Steuerung 14 zu dem Signalgerät übertragen werden können. Das Signalgerät 1 kann dazu eingerichtet sein, davon auszugehen, dass dieser Betriebsmodus, d.h. der zweite Modus, verwendet wird, wenn keine Initialisierungssequenz 19 an einem Signalgerätkontakt 10 empfangen wird.

## Patentansprüche

1. Verfahren zum Betreiben eines Signalgeräts (1), das dazu eingerichtet ist, einen Zustand (22) optisch und/oder akustisch zu signalisieren, wobei das Signalgerät (1) zumindest zwei elektrische Signalgerätkontakte (10) zur Ansteuerung und Energieversorgung des Signalgeräts (1) aufweist, **dadurch gekennzeichnet, dass** zumindest ein Signalgerätkontakt (10) des Signalgeräts (1) mit einer Verbindungsleitung (12) direkt an einen elektrischen Ausgangskontakt (15) einer speicherprogrammierbaren Steuerung (14) angeschlossen ist, sodass die elektrische Verbindung (12) zwischen dem Ausgangskontakt (15) und dem Signalgerätkontakt (10) frei von aktiven elektronischen Bauelementen ist, und an dem elektrischen Ausgangskontakt (15) der speicherprogrammierbaren Steuerung (14) serielle Daten (D) an das Signalgerät (1) übermittelt werden, vorzugsweise wobei an demselben elektrischen Ausgangskontakt (15) über dieselbe Verbindungsleitung (12) oder an zumindest einem anderen elektrischen Ausgangskontakt (15) der speicherprogrammierbaren Steuerung (14) über eine andere Verbindungsleitung (12) elektrische Energie (E) an das Signalgerät (1) übertragen wird.

2. Verfahren nach Anspruch **1, dadurch gekennzeichnet, dass** die Übermittlung der Daten (D) durch eine Änderung einer elektrischen Spannung (U) erfolgt, wobei zumindest ein erster Spannungslevel (L1) sowie ein zweiter Spannungslevel (L2) vorgesehen sind, wobei der erste Spannungslevel (L1) vorzugsweise einer Spannung (U) von im Wesentlichen 0 V entspricht.

3. Verfahren nach einem der Ansprüche 1 oder 2, **dadurch gekennzeichnet, dass** zwischen dem Signalgerät (1) und der speicherprogrammierbaren Steuerung (14) eine unidirektionale Verbindung vorliegt und Daten (D) und vorzugsweise Energie (E) ausschließlich von der speicherprogrammierbaren Steuerung (14) zu dem Signalgerät (1) übertragen werden.

4. Verfahren nach einem der Ansprüche 1 bis 3, **dadurch gekennzeichnet, dass** zumindest drei elektrische Ausgangskontakte (15) an der speicherprogrammierbaren Steuerung (14), zumindest drei Signalgerätkontakte (10) an dem Signalgerät (1) und zumindest drei Verbindungsleitungen (12) vorgesehen sind, wobei die zumindest drei Verbindungsleitungen (12) eine Bezugspotentialverbindungsleitung (12a), die ein Bezugspotential (P) führt, eine Energieversorgungsverbindungsleitung (12b), die das Signalgerät (1) mit elektrischer Energie (E) versorgt, sowie eine Datenverbindungsleitung (12c), die Daten (D) an das Signalgerät (1) übermittelt, umfassen.

5. Verfahren nach einem der Ansprüche 1 bis 3, **dadurch gekennzeichnet, dass** an dem Signalgerät (1) genau zwei Signalgerätkontakte (10) zur Verbindung mit der speicherprogrammierbaren Steuerung (14), an der speicherprogrammierbaren Steuerung (14) genau zwei elektrische Ausgangskontakte (15) zur Verbindung mit dem Signalgerät (1) und genau zwei Verbindungsleitungen (12) zur Verbindung der elektrischen Ausgangskontakte (15) mit den Signalgerätkontakten (10) vorgesehen sind, wobei die Verbindungsleitungen (12) eine Bezugspotentialverbindungsleitung (12a), die ein Bezugspotential (P) führt, sowie eine Daten- und Energieversorgungsverbindungsleitung (12d), die das Signalgerät (1) sowohl mit Energie (E) versorgt, als auch zur Übermittlung von Daten (D) dient, umfassen.

6. Verfahren nach einem der Ansprüche 1 bis 5, **dadurch gekennzeichnet, dass** die Daten (D) in Form von abgeschlossenen Datenpaketen (16) übermittelt werden.

7. Verfahren nach Anspruch 6, **dadurch gekennzeichnet, dass** Zustandsdatenpakete (25) vorgesehen sind, die Informationen (21) über den Zustand (22) und/oder Befehle (23) zur Signalisierung des Zustands enthalten.

8. Verfahren nach Anspruch 6 oder 7, **dadurch gekennzeichnet, dass** die Datenpakete (16) eine Adresse (20) des Signalgeräts (1) und/oder eine Prüfsumme (26) aufweisen oder einem oder mehreren Datenpaketen (16) ein Adressdatenpaket (20a) und/oder ein Prüfsummendatenpaket (26a) zugeordnet ist.

9. Verfahren nach einem der Ansprüche 1 bis 8, **dadurch gekennzeichnet, dass** eine Initialisierungssequenz (19) vorgesehen ist, welche von der speicherprogrammierbaren Steuerung (14) an das Signalgerät (1) übermittelt wird, um das Signalgerät (1) für eine Kommunikation mit der speicherprogrammierbaren Steuerung (14) zu initialisieren, vorzugsweise wobei die Initialisierungssequenz (19) eine Datenübertragungsrate bei der Übermittlung der Daten (D) vorgibt.

10. Verfahren nach einem der Ansprüche 1 bis 9, **dadurch gekennzeichnet, dass** das Signalgerät in einem ersten Modus, in welchem eine serielle Datenkommunikation mit der speicherprogrammierbaren Steuerung (14) ermöglicht ist, und in einem zweiten Modus, in welchem die Übermittlung von Informationen (21) über den Zustand (22) und/oder Befehle (23) zur Signalisierung des Zustands durch Anlegen eines parallelen Schaltmusters an den elektrischen Ausgangskontakten (15) der speicherprogrammierbaren Steuerung (14) ermöglicht ist, betreibbar ist.

11. Verfahren nach einem der Ansprüche 1 bis 10, **dadurch gekennzeichnet, dass** die zumindest zwei Signalgerätkontakte (10) mit einer Steuerungseinheit (7) des Signalgeräts (1) verbunden sind, sodass Daten (D), die von der speicherprogrammierbaren Steuerung (14) übertragen werden, vorzugsweise direkt an die Steuerungseinheit (7) übermittelt werden.

12. Verfahren nach Anspruch 11, **dadurch gekennzeichnet, dass** die Steuerungseinheit (7) die Daten (D) auswertet und auf Basis der ausgewerteten Daten (D) zumindest eine optische Leuchteinheit (3) und/oder akustische Toneinheit (5) des Signalgeräts (1) einstellt.

13. Verfahren nach einem der Ansprüche 1 bis 10, **dadurch gekennzeichnet, dass** parallel zum Signalgerät (1) ein weiteres Signalgerät (100) mit den Signalgerätkontakten (10) des Signalgeräts (1) elektrisch verbunden ist, wobei dem Signalgerät (1) eine Adresse (20) und dem weiteren Signalgerät (100) eine weitere Adresse (120) zugeordnet ist und die speicherprogrammierbare Steuerung (14) das Signalgerät (1) und das weitere Signalgerät (100) über die Adresse (20) und die weitere Adresse (120) ansteuert.

14. System zur optischen und/oder akustischen Wiedergabe eines Zustands (22), aufweisend:
eine speicherprogrammierbare Steuerung (14) mit zumindest einem elektrischen Ausgangskontakt (15);
ein Signalgerät (1) mit zumindest zwei Signalgerätkontakten (10) zur Ansteuerung und Energieversorgung des Signalgeräts (1), **dadurch gekennzeichnet, dass** zumindest ein Signalgerätkontakt (10) des Signalgeräts (1) mit einer Verbindungsleitung (12) direkt an den elektrischen Ausgangskontakt (15) der speicherprogrammierbaren Steuerung (14) angeschlossen ist, sodass die elektrische Verbindung (12) zwischen dem Ausgangskontakt (15) und dem Signalgerätkontakt (10) frei von aktiven elektronischen Bauelementen ist, und die speicherprogrammierbare Steuerung (14) dazu eingerichtet ist, an dem elektrischen Ausgangskontakt (15) serielle Daten (D) an das Signalgerät (1) zu übermitteln, vorzugsweise wobei die speicherprogrammierbare Steuerung (14) dazu eingerichtet ist, an demselben elektrischen Ausgangskontakt (15) über dieselbe Verbindungsleitung (12) oder an zumindest einem anderen elektrischen Ausgangskontakt (15) der speicherprogrammierbaren Steuerung (14) über eine andere elektrische Verbindungsleitung (12) elektrische Energie (E) an das Signalgerät (1) zu übertragen.

15. Computerprogrammprodukt zur Anwendung bei einem Verfahren nach einem der Ansprüche 1 bis 13, umfassend Befehle, die bei der Ausführung des Programms durch eine speicherprogrammierbare Steuerung diese veranlassen, an zumindest einem elektrischen Ausgangskontakt (15) der speicherprogrammierbaren Steuerung (14) serielle Daten (D) an das Signalgerät (1) zu übermitteln und vorzugsweise an demselben zumindest einen elektrischen Ausgangskontakt (15) oder an zumindest einem anderen elektrischen Ausgangskontakt (15) der speicherprogrammierbaren Steuerung (14) elektrische Energie (E) an das Signalgerät (1) zu übertragen.

## Claims

1. Method for operating a signaling device (1), which is configured to optically and/or acoustically signal a state (22), wherein the signaling device (1) comprises at least two electrical signaling device contacts (10) for controlling and supplying power to the signaling device (1), **characterized in that** at least one signaling device contact (10) of the signaling device (1) is connected with a connecting line (12) in particular directly to an electrical output contact (15) of a programmable logic controller (14), such that the electrical connection (12) between the output contact (15) and the signaling device contact (10) is free of active electronic components, and serial data (D) are transmitted to the signaling device (1) at the electrical output contact (15) of the programmable logic controller (14), preferably wherein electrical energy (E) is transferred to the signaling device (1) at the same electrical output contact (15) via the same connecting line (12) or at at least one other electrical output contact (15) of the programmable logic controller (14) via another connecting line (12).

2. Method according to claim 1, **characterized in that** the transmission of the data (D) takes place by a change of an electrical voltage (U), wherein at least a first voltage level (L1) and a second voltage level (L2) are provided, wherein the first voltage level (L1) preferably corresponds to a voltage (U) of essentially 0 V.

3. Method according to one of the claims 1 or 2, **characterized in that** a unidirectional connection is present between the signaling device (1) and the programmable logic controller (14) and data (D) and preferably energy (E) are transmitted exclusively from the programmable logic controller (14) to the signaling device (1).

4. Method according to one of the claims 1 to 3, **characterized in that** at least three electrical output contacts (15) are provided on the programmable logic controller (14), at least three signaling device contacts (10) are provided on the signaling device (1), and at least three connecting lines (12) are provided, wherein the at least three connecting lines (12) comprise a reference potential connecting line (12a) which carries a reference potential (P), a power supply connecting line (12b) which supplies the signaling device (1) with electrical energy (E), and a data connecting line (12c) which transmits data (D) to the signaling device (1).

5. Method according to one of the claims 1 to 3, **characterized in that** exactly two signaling device contacts (10) for connection to the programmable logic controller (14) are provided on the signaling device (1), exactly two electrical output contacts (15) for connection to the signaling device (1) are provided on the programmable logic controller (14), and exactly two connecting lines (12) for connecting the electrical output contacts (15) to the signaling device contacts (10) are provided, wherein the connecting lines (12) comprise a reference potential connecting line (12a) which carries a reference potential (P), and a data and power supply connecting line (12d) which both supplies the signaling device (1) with energy (E) and serves for the transmission of data (D).

6. Method according to one of the claims 1 to 5, **characterized in that** the data (D) are transmitted in the form of completed data packets (16).

7. Method according to claim 6, **characterized in that** state data packets (25) are provided, which contain information (21) about the state (22) and/or commands (23) for signaling the state.

8. Method according to claim 6 or 7, **characterized in that** the data packets (16) comprise an address (20) of the signaling device (1) and/or a checksum (26), or an address data packet (20a) and/or a checksum data packet (26a) is assigned to one or more data packets (16).

9. Method according to one of the claims 1 to 8, **characterized in that** an initialization sequence (19) is provided, which is transmitted from the programmable logic controller (14) to the signaling device (1) in order to initialize the signaling device (1) for a communication with the programmable logic controller (14), preferably wherein the initialization sequence (19) specifies a data transmission rate during the transmission of the data (D).

10. Method according to one of the claims 1 to 9, **characterized in that** the signaling device is operable in a first mode, in which a serial data communication with the programmable logic controller (14) is enabled, and in a second mode, in which the transmission of information (21) about the state (22) and/or commands (23) for signaling the state is enabled by applying a parallel switching pattern to the electrical output contacts (15) of the programmable logic controller (14).

11. Method according to one of the claims 1 to 10, **characterized in that** the at least two signaling device contacts (10) are connected to a control unit (7) of the signaling device (1), such that data (D), which are transmitted from the programmable logic controller (14), are preferably transmitted directly to the control unit (7).

12. Method according to claim 11, **characterized in that** the control unit (7) evaluates the data (D) and, based on the evaluated data (D), adjusts at least one optical lighting unit (3) and/or acoustic sound unit (5) of the signaling device (1).

13. Method according to one of the claims 1 to 10, **characterized in that**, in parallel with the signaling device (1), a further signaling device (100) is electrically connected to the signaling device contacts (10) of the signaling device (1), wherein an address (20) is assigned to the signaling device (1) and a further address (120) is assigned to the further signaling device (100), and the programmable logic controller (14) controls the signaling device (1) and the further signaling device (100) via the address (20) and the further address (120).

14. System for the optical and/or acoustic reproduction of a state (22), comprising:
a programmable logic controller (14) with at least one electrical output contact (15);
a signaling device (1) with at least two signaling device contacts (10) for controlling and supplying power to the signaling device (1),
**characterized in that** at least one signaling device contact (10) of the signaling device (1) is connected with a connecting line (12) in particular directly to the electrical output contact (15) of the programmable logic controller (14), such that the electrical connection (12) between the output contact (15) and the signaling device contact (10) is free of active electronic components, and the programmable logic controller (14) is configured to transmit serial data (D) to the signaling device (1) at the electrical output contact (15), preferably wherein the programmable logic controller (14) is configured to transfer electrical energy (E) to the signaling device (1) at the same electrical output contact (15) via the same connecting line (12) or at at least one other electrical output contact (15) of the programmable logic controller (14) via another electrical connecting line (12).

15. Computer program product for use in a method according to one of the claims 1 to 13, comprising instructions which, when the program is executed by a programmable logic controller, cause the programmable logic controller to transmit serial data (D) to the signaling device (1) at at least one electrical output contact (15) of the programmable logic controller (14) and preferably to transfer electrical energy (E) to the signaling device (1) at the same at least one electrical output contact (15) or at at least one other electrical output contact (15) of the programmable logic controller (14).

## Revendications

1. Procédé de fonctionnement d'un appareil de signalisation (1), qui est configuré pour signaler optiquement et/ou acoustiquement un état (22), dans lequel l'appareil de signalisation (1) présente au moins deux contacts d'appareil de signalisation (10) électriques pour la commande et l'alimentation en énergie de l'appareil de signalisation (1), **caractérisé en ce qu'**au moins un contact d'appareil de signalisation (10) de l'appareil de signalisation (1) est raccordé avec une ligne de connexion (12) en particulier directement à un contact de sortie électrique (15) d'un automate programmable industriel (14), de sorte que la connexion électrique (12) entre le contact de sortie (15) et le contact d'appareil de signalisation (10) est exempte de composants électroniques actifs, et, au niveau du contact de sortie électrique (15) de l'automate programmable industriel (14), des données sérielles (D) sont transmises à l'appareil de signalisation (1), de préférence dans lequel, au niveau du même contact de sortie électrique (15) via la même ligne de connexion (12) ou au niveau d'au moins un autre contact de sortie électrique (15) de l'automate programmable industriel (14) via une autre ligne de connexion (12), de l'énergie électrique (E) est transférée à l'appareil de signalisation (1).

2. Procédé selon la revendication 1, **caractérisé en ce que** la transmission des données (D) s'effectue par une modification d'une tension électrique (U), dans lequel au moins un premier niveau de tension (L1) ainsi qu'un deuxième niveau de tension (L2) sont prévus, dans lequel le premier niveau de tension (L1) correspond de préférence à une tension (U) de sensiblement 0 V.

3. Procédé selon l'une des revendications 1 ou 2, **caractérisé en ce qu'**une connexion unidirectionnelle est présente entre l'appareil de signalisation (1) et l'automate programmable industriel (14) et des données (D) et de préférence de l'énergie (E) sont transmises exclusivement de l'automate programmable industriel (14) à l'appareil de signalisation (1).

4. Procédé selon l'une des revendications 1 à 3, **caractérisé en ce qu'**au moins trois contacts de sortie électriques (15) sont prévus sur l'automate programmable industriel (14), au moins trois contacts d'appareil de signalisation (10) sont prévus sur l'appareil de signalisation (1) et au moins trois lignes de connexion (12) sont prévues, dans lequel les au moins trois lignes de connexion (12) comprennent une ligne de connexion de potentiel de référence (12a) qui conduit un potentiel de référence (P), une ligne de connexion d'alimentation en énergie (12b) qui alimente l'appareil de signalisation (1) en énergie électrique (E), ainsi qu'une ligne de connexion de données (12c) qui transmet des données (D) à l'appareil de signalisation (1).

5. Procédé selon l'une des revendications 1 à 3, **caractérisé en ce que** sur l'appareil de signalisation (1) sont prévus exactement deux contacts d'appareil de signalisation (10) pour la connexion à l'automate programmable industriel (14), sur l'automate programmable industriel (14) sont prévus exactement deux contacts de sortie électriques (15) pour la connexion à l'appareil de signalisation (1) et exactement deux lignes de connexion (12) sont prévues pour la connexion des contacts de sortie électriques (15) aux contacts d'appareil de signalisation (10), dans lequel les lignes de connexion (12) comprennent une ligne de connexion de potentiel de référence (12a) qui conduit un potentiel de référence (P), ainsi qu'une ligne de connexion de données et d'alimentation en énergie (12d) qui à la fois alimente l'appareil de signalisation (1) en énergie (E) et sert à la transmission de données (D).

6. Procédé selon l'une des revendications 1 à 5, **caractérisé en ce que** les données (D) sont transmises sous la forme de paquets de données complets (16).

7. Procédé selon la revendication 6, **caractérisé en ce que** des paquets de données d'état (25) sont prévus, qui contiennent des informations (21) sur l'état (22) et/ou des commandes (23) pour la signalisation de l'état.

8. Procédé selon la revendication 6 ou 7, **caractérisé en ce que** les paquets de données (16) présentent une adresse (20) de l'appareil de signalisation (1) et/ou une somme de contrôle (26) ou à un ou plusieurs paquets de données (16) est attribué un paquet de données d'adresse (20a) et/ou un paquet de données de somme de contrôle (26a).

9. Procédé selon l'une des revendications 1 à 8, **caractérisé en ce qu'**une séquence d'initialisation (19) est prévue, laquelle est transmise de l'automate programmable industriel (14) à l'appareil de signalisation (1) afin d'initialiser l'appareil de signalisation (1) pour une communication avec l'automate programmable industriel (14), de préférence dans lequel la séquence d'initialisation (19) prédéfinit une vitesse de transmission de données lors de la transmission des données (D).

10. Procédé selon l'une des revendications 1 à 9, **caractérisé en ce que** l'appareil de signalisation peut fonctionner dans un premier mode, dans lequel une communication de données sérielles avec l'automate programmable industriel (14) est permise, et dans un deuxième mode, dans lequel la transmission d'informations (21) sur l'état (22) et/ou de commandes (23) pour la signalisation de l'état est permise par l'application d'un motif de commutation parallèle aux contacts de sortie électriques (15) de l'automate programmable industriel (14).

11. Procédé selon l'une des revendications 1 à 10, **caractérisé en ce que** les au moins deux contacts d'appareil de signalisation (10) sont connectés à une unité de commande (7) de l'appareil de signalisation (1), de sorte que des données (D), qui sont transmises par l'automate programmable industriel (14), sont de préférence transmises directement à l'unité de commande (7).

12. Procédé selon la revendication 11, **caractérisé en ce que** l'unité de commande (7) évalue les données (D) et, sur la base des données (D) évaluées, règle au moins une unité lumineuse optique (3) et/ou une unité sonore acoustique (5) de l'appareil de signalisation (1).

13. Procédé selon l'une des revendications 1 à 10, **caractérisé en ce que**, parallèlement à l'appareil de signalisation (1), un autre appareil de signalisation (100) est raccordé électriquement aux contacts d'appareil de signalisation (10) de l'appareil de signalisation (1), dans lequel une adresse (20) est attribuée à l'appareil de signalisation (1) et une autre adresse (120) est attribuée à l'autre appareil de signalisation (100) et l'automate programmable industriel (14) commande l'appareil de signalisation (1) et l'autre appareil de signalisation (100) via l'adresse (20) et l'autre adresse (120).

14. Système de reproduction optique et/ou acoustique d'un état (22), présentant :
un automate programmable industriel (14) avec au moins un contact de sortie électrique (15) ;
un appareil de signalisation (1) avec au moins deux contacts d'appareil de signalisation (10) pour la commande et l'alimentation en énergie de l'appareil de signalisation (1),
**caractérisé en ce qu'**au moins un contact d'appareil de signalisation (10) de l'appareil de signalisation (1) est raccordé avec une ligne de connexion (12) en particulier directement au contact de sortie électrique (15) de l'automate programmable industriel (14), de sorte que la connexion électrique (12) entre le contact de sortie (15) et le contact d'appareil de signalisation (10) est exempte de composants électroniques actifs, et l'automate programmable industriel (14) est configuré pour transmettre des données sérielles (D) à l'appareil de signalisation (1) au niveau du contact de sortie électrique (15), de préférence dans lequel l'automate programmable industriel (14) est configuré pour transférer de l'énergie électrique (E) à l'appareil de signalisation (1) au niveau du même contact de sortie électrique (15) via la même ligne de connexion (12) ou au niveau d'au moins un autre contact de sortie électrique (15) de l'automate programmable industriel (14) via une autre ligne de connexion électrique (12).

15. Produit programme d'ordinateur pour l'utilisation dans un procédé selon l'une des revendications 1 à 13, comprenant des instructions qui, lors de l'exécution du programme par un automate programmable industriel, amènent celui-ci à transmettre des données sérielles (D) à l'appareil de signalisation (1) au niveau d'au moins un contact de sortie électrique (15) de l'automate programmable industriel (14) et de préférence à transférer de l'énergie électrique (E) à l'appareil de signalisation (1) au niveau du même au moins un contact de sortie électrique (15) ou au niveau d'au moins un autre contact de sortie électrique (15) de l'automate programmable industriel (14).
